# EUROPEAN PATENT APPLICATION

(11) **EP 4 310 648 A1**
(43) Date of publication of application: **24.01.2024**
(21) Application number: 22794609.2
(22) Date of filing: 14.04.2022
(51) Int. Cl.: G06F 3/0482

(54) **SERVICE CARD PROCESSING METHOD, AND ELECTRONIC DEVICE**

(30) Priority: 29.04.2021 CN 202110471581
(71) Applicant: Huawei Technologies Co., Ltd., Shenzhen, Guangdong 518129 (CN)
(72) Inventor: DING, Yaling, Shenzhen, Guangdong 518129 (CN); NI, Hongfeng, Shenzhen, Guangdong 518129 (CN); HU, Yue, Shenzhen, Guangdong 518129 (CN); YU, Qihui, Shenzhen, Guangdong 518129 (CN)
(74) Representative: Körber, Martin Hans
(86) International application number: PCT/CN2022/086746
(87) International publication number: WO 2022/228138

(57) **Abstract**

This application provides a service widget processing method and an electronic device. The method is applied to an electronic device. The electronic device may reconstruct, stack, and orchestrate service widgets in response to an operation of a user. During service widget reconstruction, service subwidgets of different applications or a same application may be reconstructed. Service subwidgets in a service widget may share information, to meet a requirement of a user for using a plurality of applications and a plurality of services in one scenario. When reconstructing a service widget, a user may retain or delete a service subwidget as required. An operation manner is simple, and limited display space is effectively used.

## Description

This application claims priority to Chinese Patent Application No. 202110471581.7, filed with the China National Intellectual Property Administration on April 29, 2021 and entitled "SERVICE WIDGET PROCESSING METHOD AND ELECTRONIC DEVICE", which is incorporated herein by reference in its entirety.

### TECHNICAL FIELD

This application relates to the field of electronic devices, and more specifically, to a service widget processing method and an electronic device.

### BACKGROUND

A service widget is a widget including one or more service entries. An electronic device may enter a corresponding service interface in response to detecting an operation performed by a user on a service entry. The entries are in various forms, and may be controls such as icons. A service widget may display information provided by different services.

An existing service widget is preset, and a user cannot set the service widget as required.

### SUMMARY

This application provides a service widget processing method and an electronic device. In the method, subwidgets of services of different applications may be combined, to meet a requirement of a user for using a plurality of applications and a plurality of services in one scenario.

According to a first aspect, a service widget processing method is provided. The method is applied to an electronic device. The electronic device includes a first application and a second application. The method includes: The electronic device displays a first interface, where the first interface includes a first service widget and a second service widget, the first service widget includes M service subwidgets of the first application, the second service widget includes N service subwidgets of the second application, M is an integer greater than or equal to 1, and N is an integer greater than or equal to 1. The electronic device detects a first input, where the first input is used for indicating the electronic device to generate a service widget based on the first service widget and the second service widget. The electronic device displays a second interface, where the second interface includes a third service widget, the third service widget includes X service subwidgets in the M service subwidgets and Y service subwidgets in the N service subwidgets, X is an integer greater than or equal to 1 and less than or equal to M, and Y is an integer greater than or equal to 1 and less than or equal to N.

In an embodiment of this application, a user may customize a service widget as required, and combine subwidgets of services of different applications, to meet a requirement of the user for using a plurality of applications and a plurality of services in one scenario. The user may perform operations on a service widget displayed on an interface to enter a service widget reconstruction procedure and generate a required service widget. The operations are simple and feasible.

It should be understood that the first interface and the second interface may be a desktop, a HiBoard, a control center, or a lock screen interface of the electronic device.

With reference to the first aspect, in some implementations of the first aspect, the first input includes: dragging the first service widget or the second service widget, to make the first service widget and the second service widget completely overlap or partially overlap.

With reference to the first aspect and the foregoing implementations, in some implementations of the first aspect, the electronic device may skip a service selection procedure if a sum of M and N is less than or equal to a first threshold, and display the second interface in response to the first input. If the sum of M and N is greater than the first threshold, the electronic device displays a service selection interface in response to the first input.

Specifically, after the electronic device detects the first input and before the electronic device displays the second interface, the method further includes: The electronic device displays a third interface in response to the first input, where the third interface may be the service selection interface, and the third interface includes the M service subwidgets and the N service subwidgets. The electronic device detects a second input of selecting the X service subwidgets from the M service subwidgets and selecting the Y service subwidgets from the N service subwidgets by a user; and generates the service widget based on the X service subwidgets and the Y service subwidgets selected by the user.

In an embodiment of this application, the first threshold is appropriately set, to ensure that a quantity of service subwidgets in the service widget is within an appropriate range, so that a user can clearly obtain display content of the service subwidget, and display space of a desktop can be saved.

It should be understood that another condition may be used to determine whether to skip the service selection procedure. In another possible implementation, the electronic device displays the second interface in response to the first input if a time interval from time at which the first service widget and the second service widget overlap to time at which a finger leaves a screen is less than or equal to a second threshold.

In an embodiment of this application, a user may customize a service widget as required, and combine subwidgets of services of different applications, to meet a requirement of the user for using a plurality of applications and a plurality of services in one scenario. A user may retain or delete a service subwidget as required, so that limited display space is effectively used. The user may perform operations on a service widget displayed on an interface to enter a service widget reconstruction procedure and generate a required service widget. The operations are simple and feasible.

With reference to the first aspect and the foregoing implementations, in some implementations of the first aspect, after the electronic device detects the second input and before the electronic device displays the second interface, the method further includes: The electronic device displays a fourth interface based on the X service subwidgets and the Y service subwidgets selected by the user, where the fourth interface may be a preview interface. In this case, a preview interface of the third service widget may be displayed based on the X service subwidgets and the Y service subwidgets selected by the user.

With reference to the first aspect and the foregoing implementations, in some implementations of the first aspect, the fourth interface may further include a first icon and a second icon, the first icon is used for indicating a first service widget style, the second icon is used for indicating a second service widget style, the first service widget style is different from the second service widget style. When the first icon is selected, the preview interface of the third service widget is displayed in the first service widget style. Alternatively, when the second icon is selected, the preview interface of the third service widget is displayed in the second service widget style.

In another possible implementation, the electronic device may display a plurality of preview widgets that correspond to different service widget styles. For example, a first preview widget corresponds to the first service widget style, and a second preview widget corresponds to the second service widget style.

With reference to the first aspect and the foregoing implementations, in some implementations of the first aspect, after the electronic device displays the third interface in response to the first input and before the electronic device detects the second input, the method further includes: When the third interface is displayed, the electronic device detects a third input of selecting P service subwidgets and Q service subwidgets by the user, where P is an integer greater than or equal to 1 and less than or equal to M, and Q is an integer greater than or equal to 1 and less than or equal to N. The electronic device displays a fifth interface in response to the third input, where the fifth interface is a preview interface of a fourth service widget, and the fourth service widget includes the P service subwidgets and the Q service subwidgets. The electronic device detects a fourth input; and displays the third interface in response to the fourth input.

In an embodiment of this application, a user may customize a service widget as required, and combine subwidgets of services of different applications, to try different combination manners of service subwidgets.

With reference to the first aspect and the foregoing implementations, in some implementations of the first aspect, after the first input, the method further includes: The electronic device displays a third interface in response to the first input, where the third interface includes the M service subwidgets and the N service subwidgets. The electronic device generates a fifth service widget in response to detecting a fifth input of selecting U service subwidgets and V service subwidgets by a user, where the fifth service widget includes the U service subwidgets and the V service subwidgets selected by the user. The electronic device generates a sixth service widget in response to detecting a sixth input of selecting J service subwidgets and K service subwidgets by a user, where the sixth service widget includes the J service subwidgets and the K service subwidgets selected by the user. The electronic device displays a sixth interface, where the sixth interface includes the fifth service widget and the sixth service widget.

In an embodiment of this application, a user may customize a service widget as required, and combine subwidgets of services of different applications, to meet a requirement of the user for using a plurality of applications and a plurality of services in one scenario. A user may generate a plurality of service widgets through combination in one service widget reconstruction procedure, so that a requirement of the user for generating a plurality of service widgets simultaneously for service widgets being reconstructed, and operations are simple and feasible.

With reference to the first aspect and the foregoing implementations, in some implementations of the first aspect, that the electronic device displays a sixth interface, where the sixth interface includes the fifth service widget and the sixth service widget includes: displaying the fifth service widget and the sixth service widget in an overlapping manner; and displaying the fifth service widget and the sixth service widget side-by-side. The fifth service widget and the sixth service widget may be displayed on a same interface, or may be displayed on different interfaces.

With reference to the first aspect and the foregoing implementations, in some implementations of the first aspect, after the electronic device detects the first input, the method further includes: The electronic device displays a third interface in response to the first input, where the third interface includes the M service subwidgets and the N service subwidgets; displays a seventh interface in response to detecting a seventh input of a user on the third interface, where the seventh interface includes L service subwidgets, the L service widgets are different from the M service widgets and the N service widgets, and L is an integer greater than or equal to 1; and displays an eighth interface in response to an eighth input of selecting Z service subwidgets from the L service subwidgets by the user, where the eighth interface is a preview interface of a seventh service widget, and the seventh service widget includes the X service subwidgets, the Y service subwidgets, and the Z service subwidgets.

In an embodiment of this application, a user may customize a service widget as required, and combine subwidgets of services of different applications, to meet a requirement of the user for using a plurality of applications and a plurality of services in one scenario. A user may add, as required, a service subwidget that does not belong to an original service widget during service widget reconstruction. This increases selectability of the user and combinability of service widgets, and operations are simple and feasible.

With reference to the first aspect and the foregoing implementations, in some implementations of the first aspect, after the electronic device detects the first input, the method further includes: The electronic device generates and displays an eighth service widget and a ninth service widget based on the M service subwidgets and the N service subwidgets if a sum of M and N is greater than a third threshold, where the eighth service widget is different from the ninth service widget.

It should be understood that the third threshold may be the same as the first threshold, or the third threshold may be different from the first threshold.

In an embodiment of this application, a user may customize a service widget as required, and combine subwidgets of services of different applications, to meet a requirement of the user for using a plurality of applications and a plurality of services in one scenario. The electronic device can simultaneously generate a plurality of service widgets, and operations are simple and feasible.

With reference to the first aspect and the foregoing implementations, in some implementations of the first aspect, the electronic device displays a tenth service subwidget, where the tenth service subwidget includes a first service subwidget and a second service subwidget; and when content displayed on the first service subwidget is updated from first content to second content, the electronic device updates, based on the second content, content displayed on the second service subwidget.

In an embodiment of this application, information may be shared between service subwidgets of a service widget. When the shared information is matched, subwidget linkage can be implemented, to improve user experience and meet a requirement of the user for using a plurality of applications and a plurality of services in one scenario.

With reference to the first aspect and the foregoing implementations, in some implementations of the first aspect, the first interface may further include an eleventh service widget and a twelfth service widget, and the method further includes: The electronic device detects a ninth input, where the ninth input is used for indicating the electronic device to display, on the second interface, the eleventh service widget and the twelfth service widget completely overlapping or partially overlapping.

In an embodiment of this application, a user may stack service widgets as required, and stack different service widgets in a same display area, to save desktop space.

With reference to the first aspect and the foregoing implementations, in some implementations of the first aspect, after the electronic device detects the first input and before the electronic device displays the second interface, the method further includes: The electronic device displays a ninth interface in response to the first input, where the ninth interface may be a widget orchestration interface and includes the M service subwidgets and the N service subwidgets. The electronic device detects a tenth input of selecting and sorting a third service subwidget and a fourth service subwidget by the user, where the third service subwidget is any one of the M service subwidgets, and the fourth service subwidget is any one of the N service subwidgets; and generates a thirteenth service widget based on the third service subwidget and the fourth service subwidget that are selected and sorted by the user. The electronic device displays third content on the third service subwidget and fourth content on the fourth service subwidget in an order obtained through sorting by the user.

In an embodiment of this application, a user may orchestrate service widgets as required, so that service subwidgets in the service widget perform corresponding functions in a specified execution order, so that user experience is improved, and operations are simple and feasible.

According to a second aspect, an embodiment of this application provides an electronic device. The electronic device includes modules/units for performing the method according to any one of the first aspect or the possible designs of the first aspect. The modules/units may be implemented by hardware, or may be implemented by hardware by executing corresponding software.

According to a third aspect, an embodiment of this application provides a chip. The chip is coupled to a memory in an electronic device, and is configured to invoke a computer program stored in the memory and execute the technical solution according to any one of the first aspect and the possible designs of the first aspect in embodiments of this application. In an embodiment of this application, "coupling" means that two components are directly or indirectly combined with each other.

According to a fourth aspect, an embodiment of this application provides a computer-readable storage medium. The computer-readable storage medium includes a computer program. When the computer program runs on an electronic device, the electronic device is enabled to perform the technical solution according to any one of the first aspect and the possible designs of the first aspect.

According to a fifth aspect, an embodiment of this application provides a computer program. The computer program includes instructions. When the instructions are run on a computer, the computer is enabled to perform the technical solution according to any one of the first aspect and the possible designs of the first aspect.

According to a sixth aspect, an embodiment of this application provides a graphical user interface on an electronic device. The electronic device has a display, one or more memories, and one or more processors. The one or more processors are configured to execute one or more computer programs stored in the one or more memories. The graphical user interface includes a graphical user interface displayed when the electronic device performs the technical solution according to any one of the first aspect and the possible designs of the first aspect.

For beneficial effects of the second aspect to the sixth aspect, refer to the beneficial effects of the first aspect. Details are not described again.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3 shows a group of GUIs according to an embodiment of this application;
FIG. 4(a) to FIG. 4(g) show another group of GUIs according to an embodiment of this application;
FIG. 5(a) to FIG. 5(f) show another group of GUIs according to an embodiment of this application;
FIG. 6(a) to FIG. 6(e) show another group of GUIs according to an embodiment of this application;
FIG. 7(a) to FIG. 7(f) show another group of GUIs according to an embodiment of this application;
FIG. 8(a) to FIG. 8(d) show another group of GUIs according to an embodiment of this application;
FIG. 9(a) to FIG. 9(c) show another group of GUIs according to an embodiment of this application;
FIG. 10(a) to FIG. 10(d) show another group of GUIs according to an embodiment of this application;
FIG. 11(a) to FIG. 11(c) show another group of GUIs according to an embodiment of this application;
FIG. 12(a) to FIG. 12(d) show another group of GUIs according to an embodiment of this application;
FIG. 13(a) to FIG. 13(f) show another group of GUIs according to an embodiment of this application;
FIG. 14(a) to FIG. 14(e) show another group of GUIs according to an embodiment of this application;
FIG. 15(a) to FIG. 15(d) show another group of GUIs according to an embodiment of this application;
FIG. 16(a) to FIG. 16(c) show another group of GUIs according to an embodiment of this application;
FIG. 17(a) to FIG. 17(c) show another group of GUIs according to an embodiment of this application;
FIG. 18(a) and FIG. 18(b) show another group of GUIs according to an embodiment of this application;
FIG. 19 shows another group of GUIs according to an embodiment of this application;
FIG. 20 shows another group of GUIs according to an embodiment of this application;
FIG. 21 shows another group of GUIs according to an embodiment of this application;
FIG. 22 shows another group of GUIs according to an embodiment of this application;
FIG. 23(a) to FIG. 23(f) show another group of GUIs according to an embodiment of this application; and
FIG. 24 is an example flowchart of a service widget processing method according to an embodiment of this application.

### DESCRIPTION OF EMBODIMENTS

Terms used in the following embodiments are merely intended to describe specific embodiments, but are not intended to limit this application. The terms "one", "a" and "this" of singular forms used in this specification and the appended claims of this application are also intended to include plural forms, for example, "one or more", unless otherwise specified in the context clearly. It should be further understood that, in the following embodiments of this application, "at least one" and "one or more" mean one, two, or more. The term "and/or" is used to describe an association relationship between associated objects and represents that three relationships may exist. For example, A and/or B may represent the following cases: Only A exists, both A and B exist, and only B exists, where A and B each may be singular or plural. The character "/" usually indicates an "or" relationship between associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The following describes an electronic device, a user interface used for the electronic device, and embodiments used for using the electronic device. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of a portable electronic device includes but is not limited to a portable electronic device using iOS^{®}, Android^{®}, Microsoft^{®}, or another operating system. The portable electronic device may alternatively be another portable electronic device, like a laptop computer (Laptop). It should be further understood that, in some other embodiments, the foregoing electronic device may not be the portable electronic device but a desktop computer.

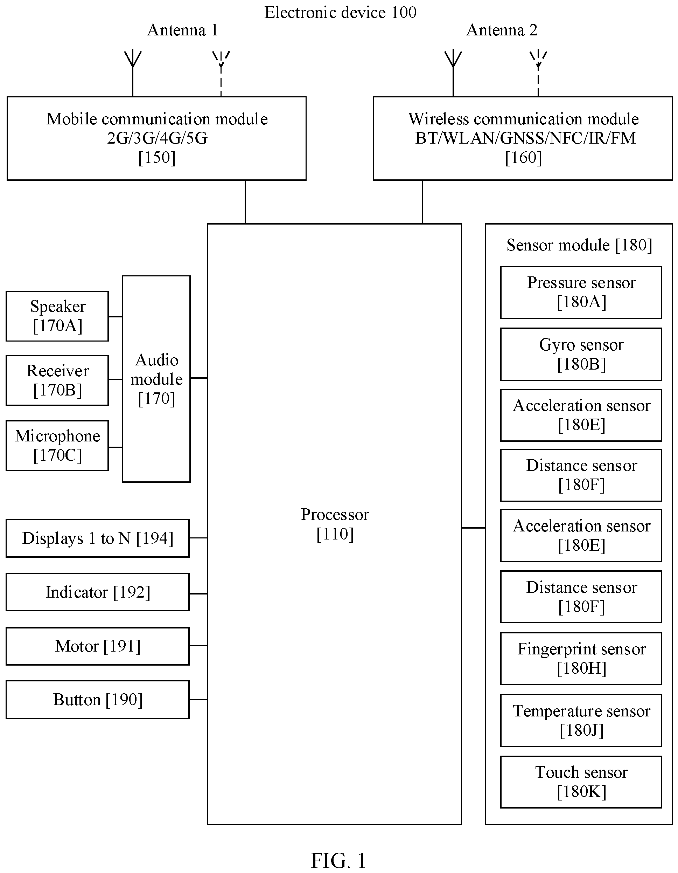

For example, FIG. 1 is a schematic diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identification module (subscriber identification module, SIM) card interface 195, and the like.

It may be understood that the structure shown in an embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may be disposed in the processor 110, to store instructions and data. For example, the memory in the processor 110 may be a cache. The memory may store instructions or data that has been used or is cyclically used by the processor 110. If the processor 110 needs to use the instructions or the data again, the processor 110 may directly invoke the instructions or the data from the memory. This avoids repeated access and reduces a waiting time of the processor 110, thereby improving data processing or instruction execution efficiency of the electronic device 101.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to USB standard specifications, and may be specifically a mini USB interface, a micro USB interface, a USB Type-C interface, or the like. The USB interface 130 may be configured to connect to a charger to charge the electronic device 101, or may be configured to transfer data between the electronic device 101 and a peripheral device. The USB interface 130 may alternatively be configured to connect to a headset to play audio by using the headset.

It may be understood that an interface connection relationship between the modules shown in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input through a wireless charging coil of the electronic device 100. The charging management module 140 may further supply power to the electronic device by using the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like. The power management module 141 may be configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, an antenna may be used in combination with a tuning switch.

The mobile communication module 150 may provide a wireless communication solution that includes 2G/3G/4G/5G or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communications processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The electronic device 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, quantum dot light emitting diodes (quantum dot light emitting diodes, QLED), or the like. In some embodiments, the electronic device 100 may include one or more displays 194.

In some embodiments of this application, the display 194 in FIG. 1 is foldable when the display panel is made of a material like an OLED, an AMOLED, or an FLED. That the display 194 may be folded means that the display may be folded to any angle at any part and may be maintained at the angle. For example, the display 194 may be folded left and right in the middle, or may be folded up and down in the middle.

The display 194 of the electronic device 100 may be a flexible display, and currently, the flexible display has attracted much attention due to its unique features and huge potential. Compared with a conventional screen, the flexible screen has features of strong flexibility and foldability, and can provide a user with a new foldability-based interaction mode, to meet more requirements of the user on the electronic device. For an electronic device configured with a foldable display, the foldable display of the electronic device may be switched between a small screen in a folded form and a large screen in an expanded form at any time. Therefore, the user uses a split-screen function more frequently on the electronic device configured with the foldable display.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to: compress or decompress a digital video. The electronic device 100 may support one or more types of video codecs. Therefore, the electronic device 100 may play or record videos in a plurality of coding formats, for example, moving picture experts group (moving picture experts group, MPEG)-1, MPEG-2, MPEG-3, MPEG-4, and the like.

The NPU is a neural-network (neural-network, NN) computing processor. The NPU quickly processes input information based on a structure of a biological neural network, for example, based on a transfer mode between human brain neurons; and may further continuously perform self-learning. Applications such as intelligent cognition of the electronic device 100, for example, image recognition, facial recognition, speech recognition, and text understanding, may be implemented by using the NPU.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store one or more computer programs, and the one or more computer programs include instructions. The processor 110 may run the instructions stored in the internal memory 121, so that the electronic device 101 performs the display method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a nonvolatile memory, for example, one or more magnetic disk storage devices, a flash memory device, or a universal flash storage (universal flash storage, UFS). In some embodiments, the processor 110 may run the instructions stored in the internal memory 121 and/or the instructions stored in the memory that is disposed in the processor 110, to enable the electronic device 101 to perform the payment method provided in embodiments of this application, other applications, and data processing. The electronic device 100 may implement audio functions, for example, a music playing function and a recording function, by using the audio module 170, the speaker 170A, the telephone receiver 170B, the microphone 170C, the headset jack 170D, the application processor, and the like.

The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation by using the pressure sensor 180A. The electronic device 100 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyro sensor 180B may be configured to determine a motion posture of the electronic device 100. In some embodiments, an angular velocity of the electronic device 100 around three axes (that is, axes X, Y, and Z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a motion-sensing game scenario.

The acceleration sensor 180E may detect accelerations in various directions (usually on three axes) of the electronic device 100, and when the electronic device 100 is still, a magnitude and a direction of gravity may be detected. The acceleration sensor 180E may be further configured to identify a posture of the electronic device, and is used in switching between landscape mode and portrait mode, a pedometer, or a like application.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 form a touchscreen. The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from a location of the display 194.

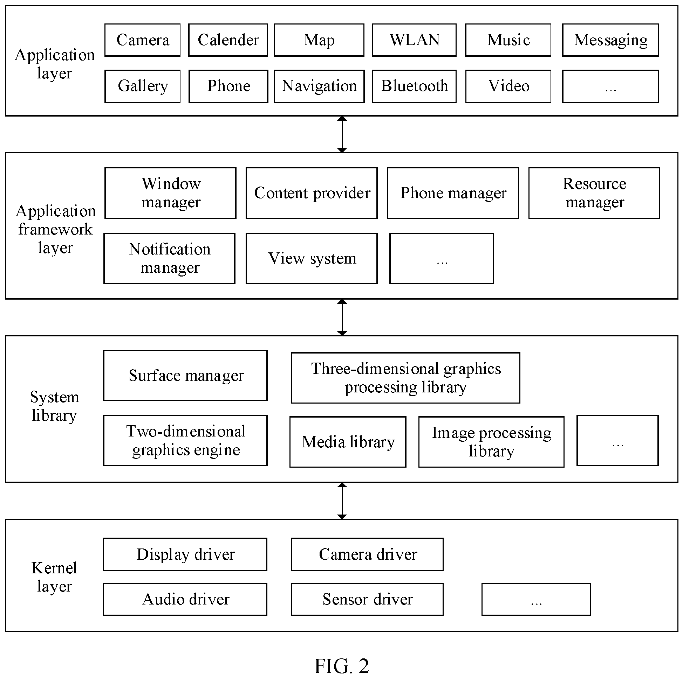

FIG. 2 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, lock a screen, take a screenshot, and the like.

The content provider is configured to store and obtain data, and enable the data to be accessed by an application. The data may include a video, an image, audio, calls that are made and received, a browsing history and bookmarks, a phone book, and the like.

The view system includes visual controls, such as a control for displaying a text and a control for displaying an image. The view system may be configured to construct an application. A display interface may include one or more views. For example, a display interface including a notification icon of Messages may include a text display view and a picture display view.

The phone manager is configured to provide a communication function for the electronic device 100, for example, management of a call status (including connecting, ending, or the like).

The resource manager provides various resources such as a localized character string, an icon, an image, a layout file, and a video file for an application.

The notification manager enables an application to display notification information in the status bar, and may be configured to transmit a notification-type message. The displayed information may automatically disappear after a short pause without user interaction. For example, the notification manager is configured to notify download completion, give a message notification, and the like. The notification manager may alternatively be a notification that appears in a top status bar of the system in a form of a graph or a scroll bar text, for example, a notification of an application running on the background or a notification that appears on a screen in a form of a dialog window. For example, text information is prompted in the status bar, a prompt tone is played, the electronic device vibrates, or an indicator blinks.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before embodiments of this application are described, several concepts related to embodiments of this application are first described.

Service: A function that can be performed is called a service. "Music" is used as an example. "Music" includes executable functions such as playing music, downloading, and local music. Each function may be referred to as a service.

Quick app: A user can use a quick app to implement a service of a native app without downloading the native app. Quick apps have advantages of installation-free, storage-free, one-click access, and direct push of updates. Native apps are various applications installed on an electronic device. "Music" is used as an example. "Music" includes executable functions such as playing music, downloading, and local music. When a user wants to perform the foregoing functions, the user needs to install the "Music" app. However, through a quick app, the user can perform the foregoing functions without installing the "Music" app.

It should be understood that an executable function in a quick app is also referred to as a service.

A service widget is a widget including one or more service entries. An electronic device may enter a corresponding service interface in response to detecting an operation performed by a user on a service entry. The entries are in various forms, and may be controls such as icons. A service widget may display information provided by different services. The service widget may be placed on a desktop, a HiBoard, a control center, or a lock screen interface. The service widget is in various forms, for example, may be a widget (Widget).

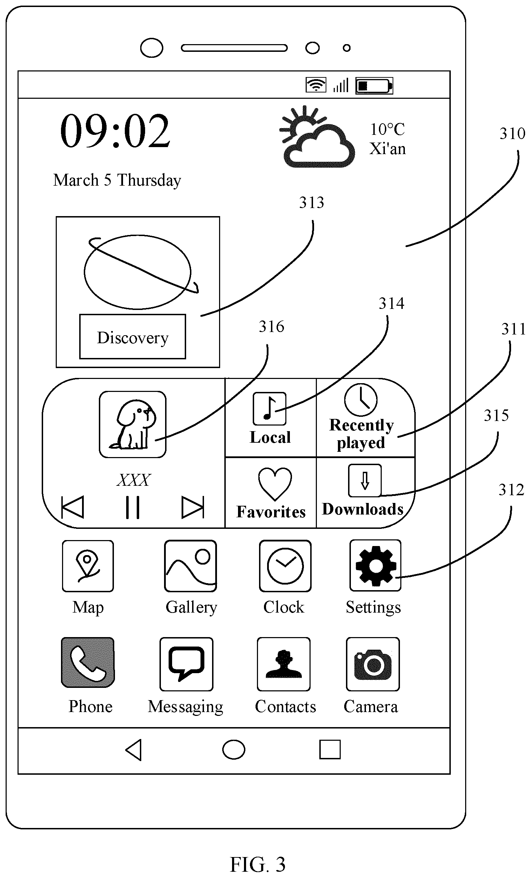

As shown in FIG. 3, the electronic device displays an interface 310. The interface 310 may include application icons (for example, a map application icon, a gallery application icon, a clock application icon, and a settings application icon 312) and service widgets (for example, a service widget 311 and a service widget 313). Five service subwidgets are displayed in the service widget 311, and the five service subwidgets may respectively correspond to different services, for example, "Play music", "Local music", "Recently played", "Favorites", and "Downloads". The electronic device may display an interface of a "Local" service in response to an operation of tapping an icon 314 corresponding to the "Local" service by the user, and display an interface of a "Downloads" service in response to an operation of tapping an icon 315 corresponding to the "Downloads" service by the user. A song cover, a song name, a play pause key, a forward key, and a rewind key are displayed in a subwidget 316 corresponding to "Play music". The user may use content displayed in the service subwidget to obtain related information of music being played, and may further control playing of the music with keys such as a "pause key", a "forward key", and a "rewind key".

In the conventional technology, service widgets are preset, and the user cannot set service widgets as required. Based on this, an embodiment of this application provides a service widget reconstruction method. A user can reconstruct service widgets of a same application, and can also reconstruct service widgets of different applications, to meet diversified requirements of the user.

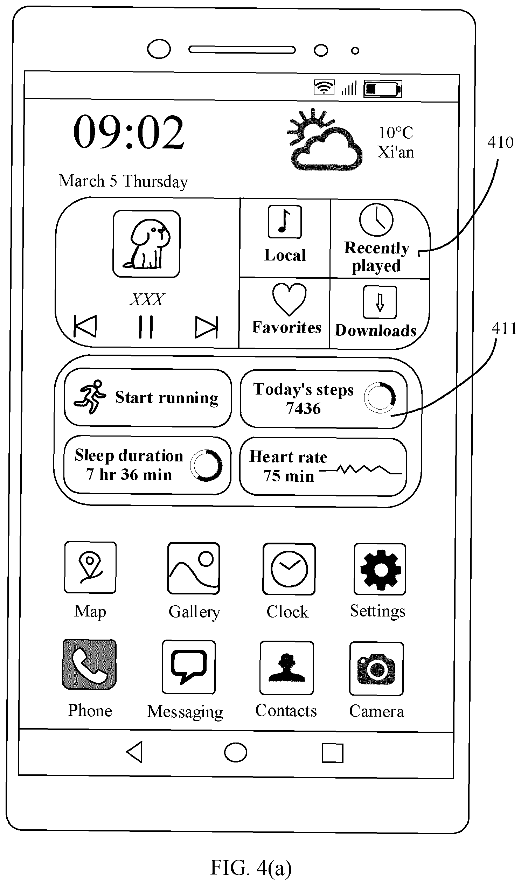

FIG. 4(a) to FIG. 4(g) show a group of graphical user interfaces (graphical user interface, GUI) according to an embodiment of this application.

As shown in FIG. 4(a), a plurality of service widgets are displayed on a desktop. A service widget 410 is a music service widget, and includes a total of five service subwidgets that correspond to different services, for example, "Play music", "Local", "Recently played", "Favorites", and "Downloads". A service widget 411 is a Huawei Health service widget, and includes a total of four service subwidgets that correspond to different services: "Start running", "Today's steps", "Sleep duration", and "Heart rate". The services in the two service widgets may be service widgets selected and combined by the user as required, or may be preset service widgets. For example, after the user installs an application, the application automatically recommends and generates service widgets, or an electronic device generates service widgets based on use habits of the user, for example, generates a service widget including subwidgets of five services that are frequently used by the user. The preset service widgets may include service subwidgets corresponding to all services of the application, or may include only service subwidgets corresponding to some services of the application.

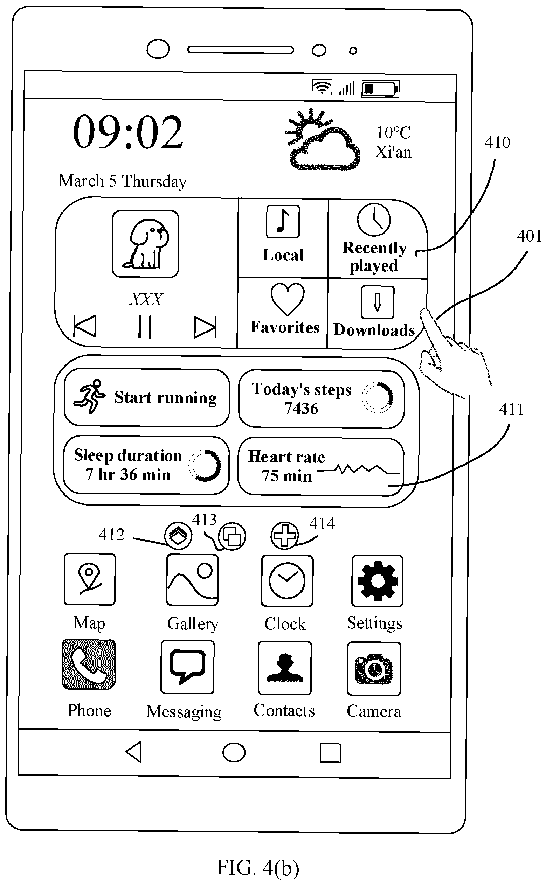

As shown in FIG. 4(b), when detecting a first operation by the user, the electronic device may display a reconstruction icon 413 in response to the first operation.

For example, the first operation may be dragging one service widget by the user to an edge of another service widget, and/or dragging a plurality of service widgets by the user to move the service widgets closer to a distance less than a preset distance. For example, as shown in FIG. 4(b), the electronic device displays the reconstruction icon 413 in response to detecting an operation of holding down the service widget 410 by the user and dragging the service widget 410 to an edge 401 of the service widget 411. Alternatively, the electronic device may display the reconstruction icon 413 in response to an operation of detecting that the user simultaneously holds down the service widget 410 and the service widget 411 and drags the service widget 410 and the service widget 411 to make the two widgets overlap.

Optionally, as shown in FIG. 4(b), to facilitate operations of the user, an operated service widget may be scaled down based on a preset proportion.

Optionally, as shown in FIG. 4(b), the electronic device may display a stacking icon 412 and/or an orchestration icon 414 in response to the first operation. For specific content, refer to the following description.

It should be understood that, in embodiments of this application, the first operation for displaying a reconstruction icon on the electronic device may be set by the user or a system. This is not limited in this application. The first operation is also not limited to the example shown in FIG. 4(a) to FIG. 4(g).

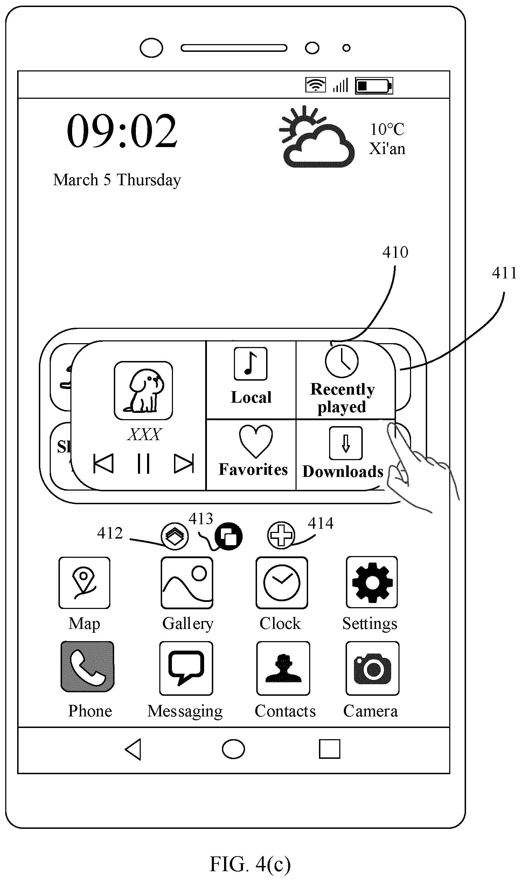

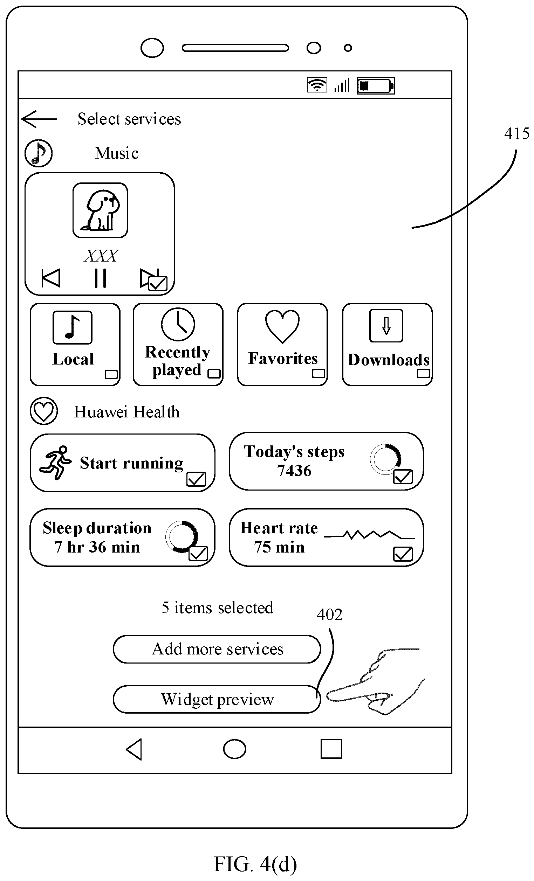

As shown in FIG. 4(c) and FIG. 4(d), after detecting a second operation of selecting the reconstruction icon 413 by the user, the electronic device enters a service widget reconstruction procedure in response to the second operation.

The second operation may be dragging one service widget by the user to another service widget and moving a finger away from a screen. One service widget may be completely above a display area of another service widget, or one service widget may be partially above a display area of another service widget. Optionally, the electronic device may highlight the reconstruction icon 413, so that the user knows that in this case, the service widget reconstruction procedure is to be entered when the finger leaves the screen.

For example, as shown in FIG. 4(c), after the electronic device displays the reconstruction icon 413, the electronic device detects that the user continues to hold down the service widget 410 and drags the service widget 410 downward until the service widget 410 is completely above a display area of the service widget 411. In this case, the reconstruction icon 413 is highlighted. In this case, if the electronic device detects that the finger of the user leaves the screen, the electronic device enters the service widget reconstruction procedure.

It should be noted that, when the electronic device displays a plurality of icons such as the reconstruction icon 413, the stacking icon 412, and the orchestration icon 414, the user may drag a widget to select a corresponding icon as required. As shown in FIG. 4(c), after the service widget 410 is dragged above the service widget 411, the electronic device sequentially displays the stacking icon 412, the reconstruction icon 413, and the orchestration icon 414 from left to right. The reconstruction icon 413 is in a selected state. In this case, the user may drag the widget to the left to select the stacking icon, or drag the widget to the right to select the orchestration icon. Similarly, when the stacking icon is selected, the stacking icon may be highlighted, so that the user knows that in this case, an icon stacking procedure is to be entered when the finger leaves the screen.

It should be understood that, in embodiments of this application, the second operation for selecting a reconstruction icon may be set by the user or the system. This is not limited in this application. The second operation is also not limited to the example shown in FIG. 4(a) to FIG. 4(g).

It should be noted that, in the foregoing embodiment, an example in which the first operation and the second operation form one complete operation is used for description. It may be understood that the first operation and the second operation may be two separate operations.

As shown in FIG. 4(d), after the electronic device enters the service widget reconstruction procedure, the electronic device may display a service selection interface 415.

For example, the service selection interface 415 may include all service subwidgets of a reconstructed service widget. For example, as shown in FIG. 4(d), the service widget 410 and the service widget 411 are reconstructed, and the electronic device may display, on the service selection interface 415, five service subwidgets included in the service widget 410: a "Play music" subwidget, a "Local" subwidget, a "Recently played" subwidget, a "Favorites" subwidget, a "Downloads" subwidget, and four service subwidgets included in the service widget 411: "Start running", "Today's steps", "Sleep duration", and "Heart rate".

Optionally, the electronic device may display the service subwidgets by category based on applications to which the service subwidgets belong. For example, the service subwidgets corresponding to "Play music", "Local", "Recently played", "Favorites", and "Downloads" belong to the "Music" app, and the service subwidgets corresponding to "Start running", "Today's steps", "Sleep duration", and "Heart rate" belong to the "Huawei Health" app. As shown in FIG. 4(d), the service subwidgets are displayed by category based on "Music" and "Huawei Health".

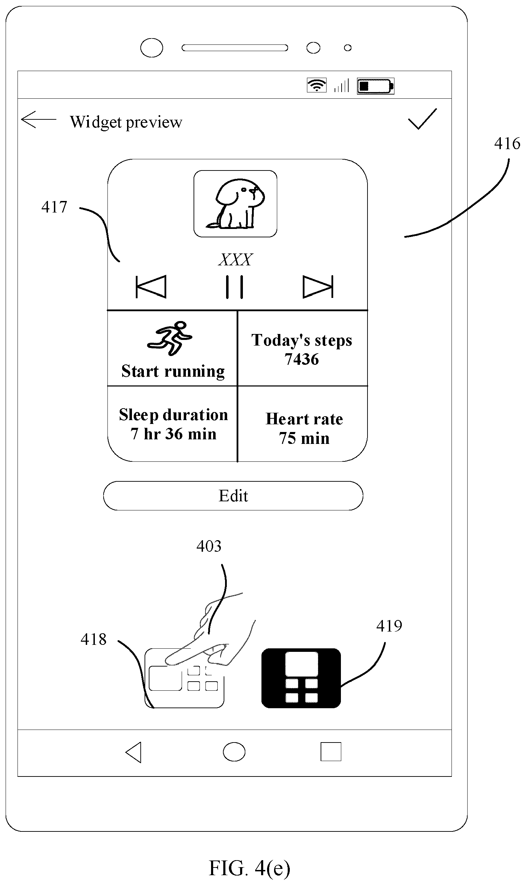

As shown in FIG. 4(d) and FIG. 4(e), after the electronic device detects that the user completes an operation of selecting a service subwidget, the electronic device may display a widget preview interface in response to the operation.

For example, an operation of selecting a service completed by the user may be that the user taps a widget preview key 402 on the service selection interface 415.

The widget preview interface 416 may include a preview widget 417. As shown in FIG. 4(d) and FIG. 4(e), the user selects five service subwidgets on the service selection interface 415. After detecting an operation of tapping the widget preview key 402 by the user, the electronic device generates the preview widget 417 based on the five services selected by the user in response to the operation, and displays the preview widget 417 on the widget preview interface 416.

Optionally, the widget preview interface may further include a widget style icon (for example, an icon 418 or an icon 419). The user may select a widget style icon corresponding to a required widget style template to switch a widget style. For example, as shown in FIG. 4(e), after detecting an operation of tapping a service widget style template 418 by the user, the electronic device switches the service widget style from FIG. 4(e) to FIG. 4(f). It should be understood that an operation of switching a service widget style is not limited thereto. For example, the user may alternatively swipe left (or right) in a blank area of the widget preview interface to switch the service widget style.

Optionally, the user may drag an edge of a preview widget displayed on the widget preview interface to change a size of the service widget. The user may drag a subwidget in the preview widget to change a position of the subwidget in the service widget.

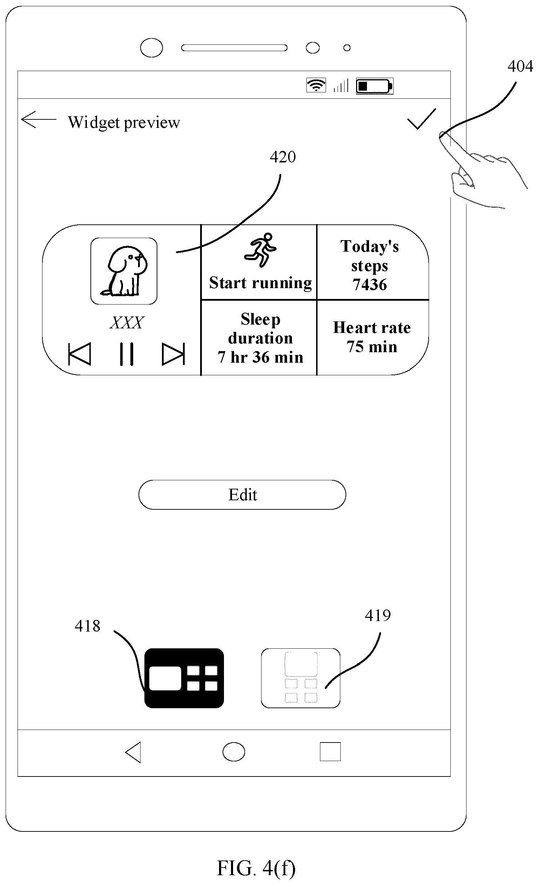

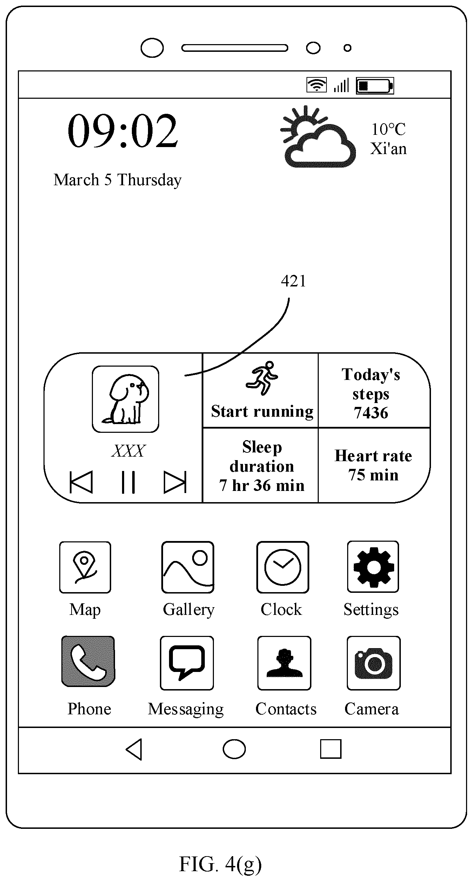

As shown in FIG. 4(f) and FIG. 4(g), after detecting an operation of determining content and a style of a service widget by a user, the electronic device displays a reconstructed service widget on the desktop in response to the operation.

For example, after detecting an operation of tapping an OK key 404 by the user, the electronic device displays a preview widget 420 on the desktop in response to the operation. Optionally, when a style of the reconstructed service widget is the same as a style of a service widget being reconstructed, a display area of the reconstructed service widget may be the same as a display area of the service widget being reconstructed. For example, as shown in FIG. 4(a) and FIG. 4(g), a display area of a reconstructed service widget 421 is the same as a display area of the service widget 411. It should be understood that the display area of the reconstructed service widget 421 may be alternatively the same as a display area of the service widget 410.

When the style of the reconstructed service widget is different from the style of the service widget being reconstructed, that the electronic device displays the service widget based on the style of the reconstructed service widget includes: when the display area of the reconstructed service widget is smaller than the remaining display area of an interface (hereinafter referred to as an "original interface") in which the service widget being reconstructed is located, the service widget may be displayed on the original interface; and when the display area of the reconstructed service widget is larger than the remaining display area of the original interface, the electronic device may display the service widget on another interface that can accommodate the service widget.

For example, a display area of an application icon is a 1*1 grid, and a display area of a reconstructed service widget is a 4*2 grid. If the remaining display area of an interface (hereinafter referred to as an "original interface") in which the service widget being reconstructed is located is a 4*4 grid, the service widget may be displayed on the original interface. If the remaining display area of the original interface is a 2*2 grid, the service widget may be displayed on another interface that can accommodate the service widget, or the electronic device may generate a new interface to display the service widget.

In an embodiment of this application, a user may customize a service widget as required, and combine subwidgets of services of different applications, to meet a requirement of the user for using a plurality of applications and a plurality of services in one scenario. A user may retain or delete a service subwidget as required, so that limited display space is effectively used. The user may perform operations on a service widget displayed on an interface to enter a service widget reconstruction procedure and generate a required service widget. The operations are simple and feasible.

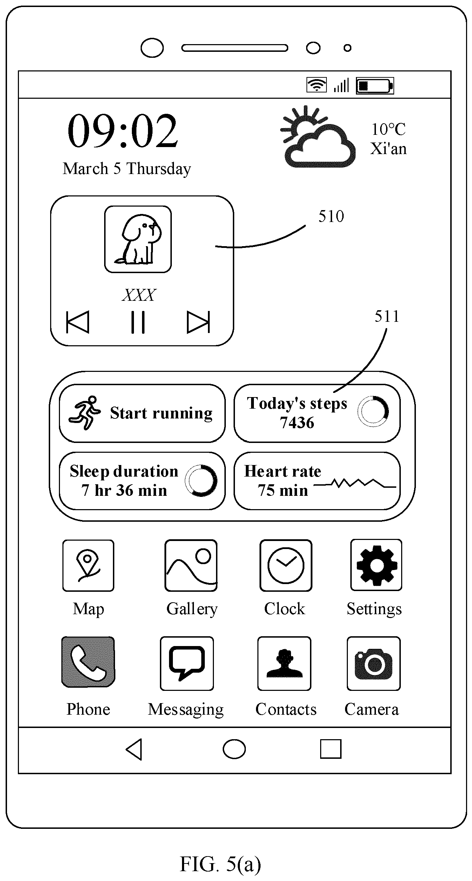

FIG. 5(a) to FIG. 5(f) show another group of GUIs according to an embodiment of this application.

As shown in FIG. 5(a), there are a plurality of service widgets on a desktop. A service widget 510 is a music service widget, and includes one service subwidget that corresponds to a "Play music" service. A service widget 511 is a Huawei Health service widget, and includes a total of four service subwidgets that correspond to different services: "Start running", "Today's steps", "Sleep duration", and "Heart rate".

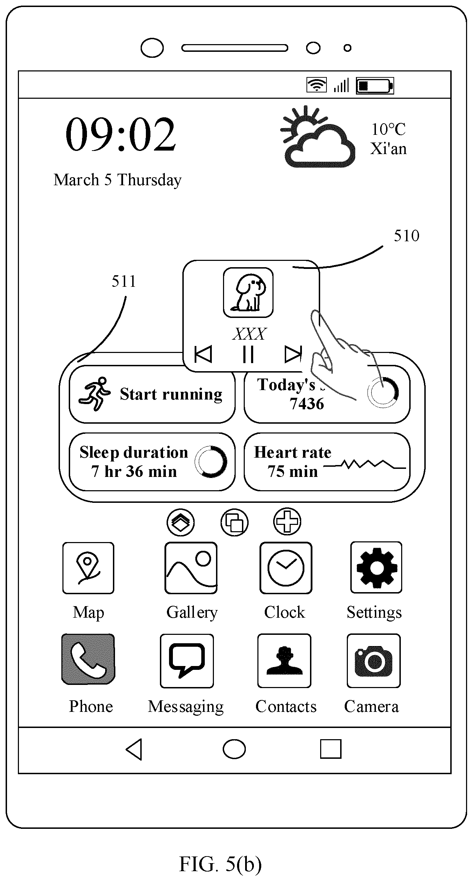

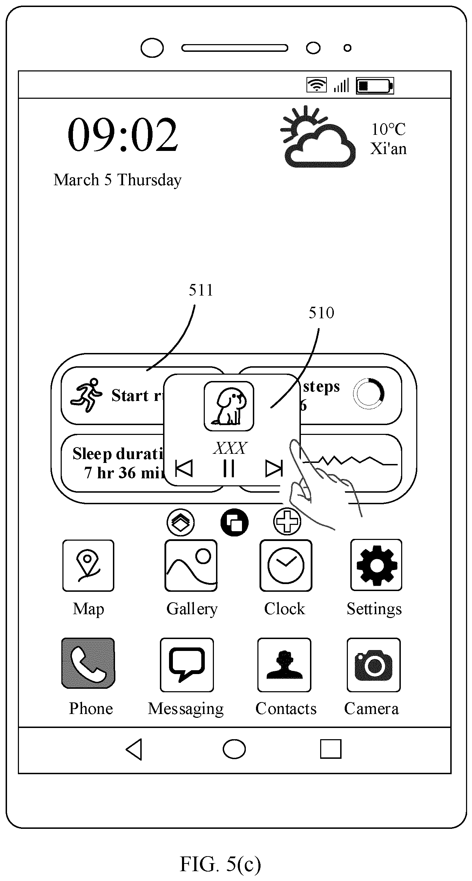

As shown in FIG. 5(b) and FIG. 5(c), after detecting a first operation and a second operation by a user, the electronic device enters a service widget reconstruction procedure in response to the first operation and the second operation. For descriptions of the first operation and the second operation, refer to the foregoing embodiment. Details are not described herein again.

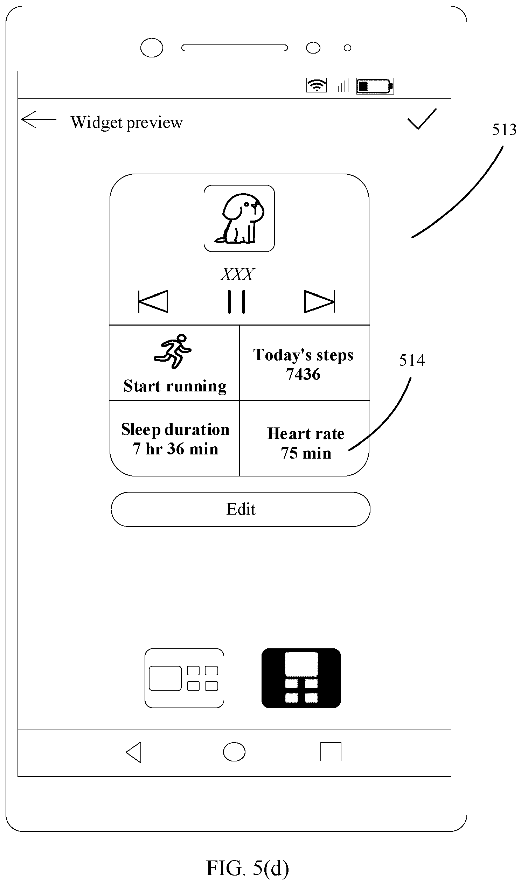

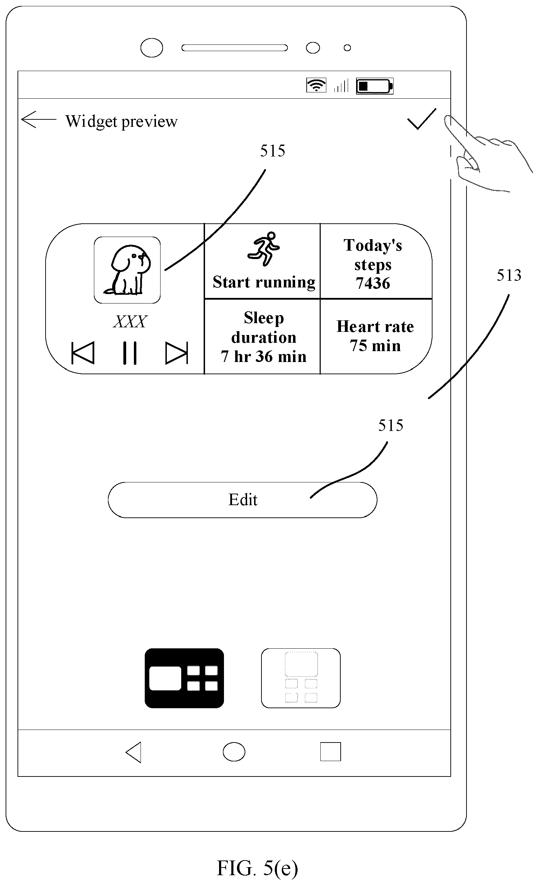

As shown in FIG. 5(d) and FIG. 5(e), after the electronic device enters the service widget reconstruction procedure, the electronic device may skip a service selection procedure based on a first condition, and display a widget preview interface 513.

For example, the first condition may be that a quantity of service subwidgets of a service widget being reconstructed is less than a first threshold, and/or a time interval from time at which the service widgets are overlapped and time at which a finger leaves a screen is less than (or greater than) a second threshold. For example, the first threshold is 6. As shown in FIG. 5(d) and FIG. 5(e), the electronic device reconstructs the service widget 510 and the service widget 511 in response to the first operation and the second operation by the user, a sum of quantities of service subwidgets of the two service widgets is 5, and the quantity of service subwidgets is less than the first threshold. To simplify the service widget reconstruction procedure, the electronic device may skip the service selection procedure, and display the widget preview interface 513. The widget preview interface 513 may include a preview widget 514, and the preview widget 514 may include service subwidgets of the service widget 510 and service subwidgets of the service widget 511. Alternatively, in response to the first operation and the second operation by the user, when the electronic device detects that duration of highlighting a reconstruction icon is less than (or greater than) the second threshold, the electronic device skips the service selection procedure, and displays the widget preview interface 513.

Optionally, the widget preview interface may further include a widget style icon. For descriptions of the widget style icon, refer to the foregoing embodiment. Details are not described herein again.

Optionally, the widget preview interface may further include an edit control (for example, an edit key 515). The edit control may be configured to trigger the electronic device to display a service selection interface. The service selection interface includes all service subwidgets of the service widget being reconstructed. The user may reselect service subwidgets on the service selection interface. For example, preview widgets displayed on the widget preview interface of the electronic device include "Play music", "Start running", "Today's steps", "Sleep duration", and "Heart rate". In response to an operation of tapping the edit key 515 by the user, the electronic device displays the service selection interface. The service selection interface includes the foregoing five service subwidgets. The user reselects "Play music", "Start running", and "Today's steps", and preview widgets displayed on the widget preview interface include three service subwidgets: "Play music", "Start running" and "Today's steps".

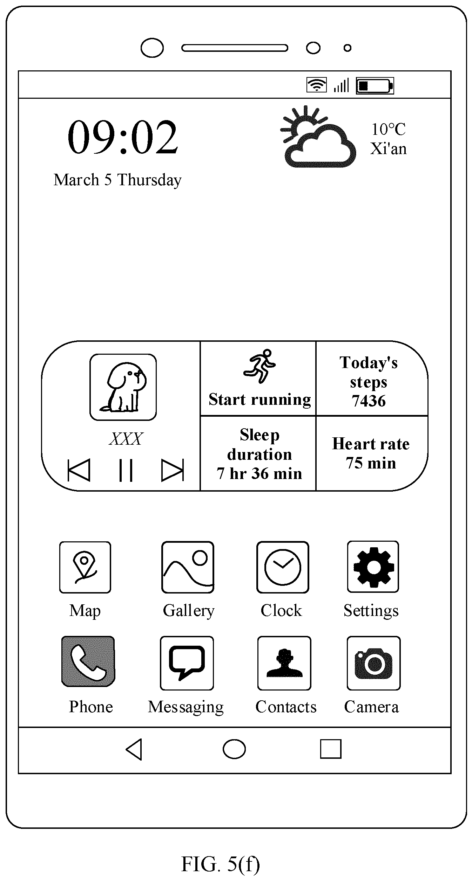

As shown in FIG. 5(f), after detecting an operation of determining content and a style of a service widget by a user, the electronic device displays a reconstructed service widget on the desktop in response to the operation. For descriptions of displaying the reconstructed service widget on the desktop, refer to the foregoing embodiment. Details are not described herein again.

It should be understood that whether the electronic device skips the service selection procedure may be preset by the user or the system. If the user or the system has preset that the electronic device enters the service selection procedure when the service widget is reconstructed, the electronic device may also enter the service selection procedure when the first condition is met.

Optionally, the electronic device may further skip a style selection procedure. After entering the service widget reconstruction procedure, the electronic device may skip the style selection procedure based on a second condition, and display a reconstructed service widget on the desktop. The second condition may be the same as the first condition, or may be different from the first condition. For example, as shown in FIG. 5(a), FIG. 5(b), FIG. 5(c), and FIG. 5(f), the electronic device reconstructs the service widget 510 and the service widget 511 in response to the first operation and the second operation by the user, a sum of quantities of service subwidgets of the two service widgets is 5, and the quantity of service subwidgets is less than the first threshold. In this case, a style selection procedure is skipped, and reconstructed service widgets are displayed on the desktop according to a default service widget style or a display area of the desktop.

It should be understood that whether the electronic device skips the style selection procedure may be preset by the user or the system. If the user or the system has preset that the electronic device enters the style selection procedure when the service widget is reconstructed, the electronic device may also enter the style selection procedure when the first condition is met.

It should be further understood that when skipping the style selection procedure, the electronic device may simultaneously skip the service selection procedure.

Optionally, after the electronic device enters the service widget reconstruction procedure, the electronic device may display the service selection interface based on the second condition. After detecting that the user completes an operation of selecting a service subwidget, in response to the operation, the electronic device combines the service subwidgets selected by the user to generate a service widget, and displays the service widget on a desktop, a HiBoard, a control center, or a lock screen interface.

In an embodiment of this application, a user may customize a service widget as required, and combine subwidgets of services of different applications, to meet a requirement of the user for using a plurality of applications and a plurality of services in one scenario. The electronic device may simplify a service widget procedure based on the first condition, and generate a required service widget. Operations are simple and feasible.

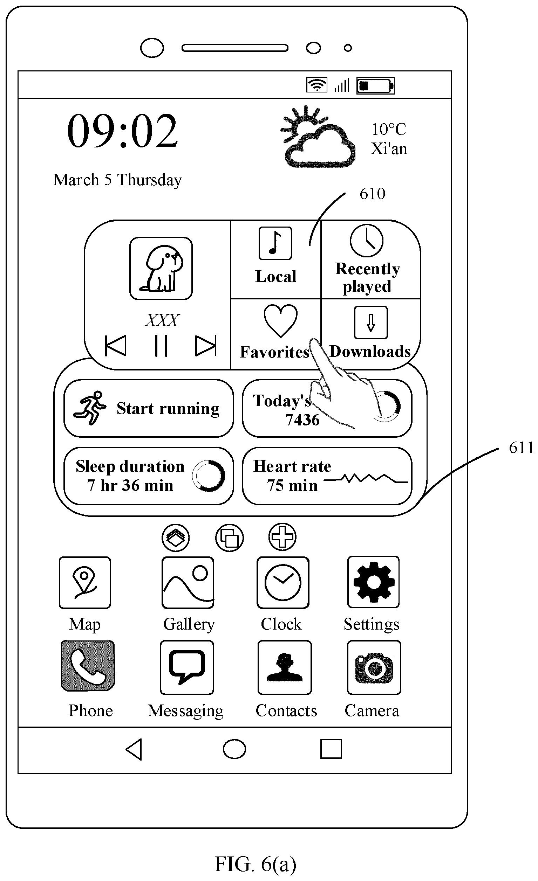

FIG. 6(a) to FIG. 6(e) show another group of GUIs according to an embodiment of this application.

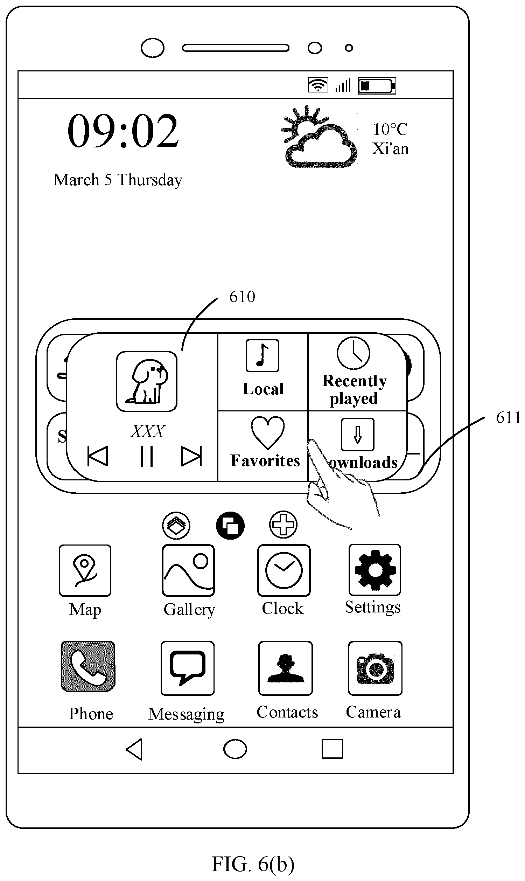

As shown in FIG. 6(a) and FIG. 6(b), after detecting a first operation and a second operation by a user, the electronic device enters a service widget reconstruction procedure in response to the first operation and the second operation.

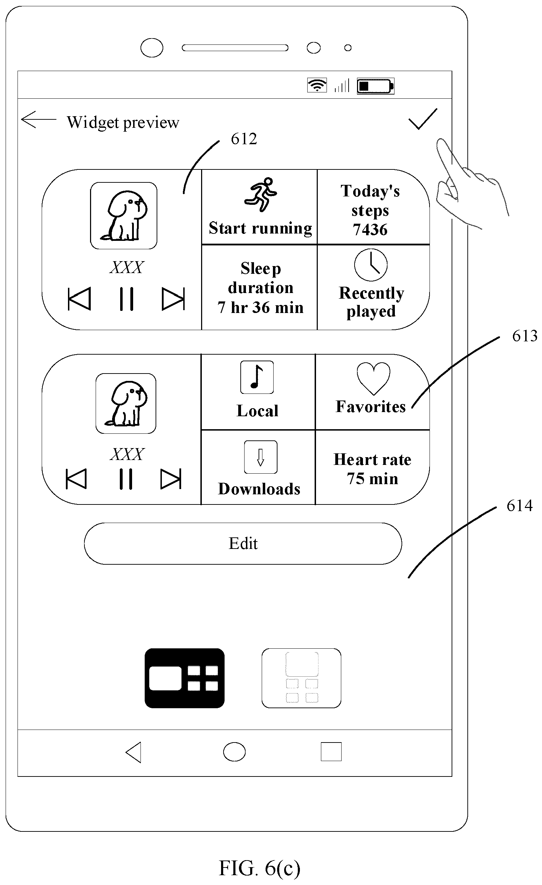

As shown in FIG. 6(c), after the electronic device enters the service widget reconstruction procedure, the electronic device may skip a service selection procedure based on a third condition, and display a widget preview interface 614. The widget preview interface 614 includes a plurality of preview widgets. Each preview widget may include different service subwidgets.

For example, the third condition may be that a quantity of service subwidgets of a service widget being reconstructed is greater than a first threshold. For example, the first threshold is 6. As shown in FIG. 6(c), the electronic device reconstructs a service widget 610 and a service widget 611 in response to the first operation and the second operation by the user, a sum of quantities of service subwidgets of the two service widgets is 9, and the quantity of service subwidgets is greater than the first threshold. In this case, the electronic device may skip the service selection procedure, and display a preview widget 612 and a preview widget 613 on the widget preview interface 614 based on a correlation between the service subwidgets of the service widget 610 and the service widget 611 (for specific content, refer to the following descriptions). The preview widget 612 includes subwidgets corresponding to "Play music", "Start running", "Today's steps", "Sleep duration", and "Heart rate" services. The preview widget 613 includes subwidgets corresponding to "Play music", "Local", "Favorites", "Downloads", and "Heart rate" services.

Optionally, the widget preview interface may further include a widget style icon. For descriptions of the widget style icon, refer to the foregoing embodiment. Details are not described herein again.

Optionally, when switching a service widget style, the user may simultaneously switch two service widget styles, or may separately switch different service widget styles. For example, the user may tap the preview widget 612, and the preview widget 612 is highlighted. Then the user taps the widget style icon to switch the service widget style, to complete service widget style switching of the preview widget 612. An operation of switching a service widget style of the preview widget 613 is similar to the foregoing operation, and details are not described herein again.

Optionally, the widget preview interface 614 may further include an edit control. For descriptions of the edit control, refer to the foregoing embodiment. Details are not described herein again.

It should be understood that, in an embodiment of this application, that the electronic device simultaneously displays two preview widgets on the widget preview interface is used as an example, but is not limited thereto. The electronic device may further simultaneously display more preview widgets on the widget preview interface. Optionally, the user or the system may preset a quantity of widgets that are simultaneously displayed. For example, it is set that a maximum of three preview widgets are displayed simultaneously.

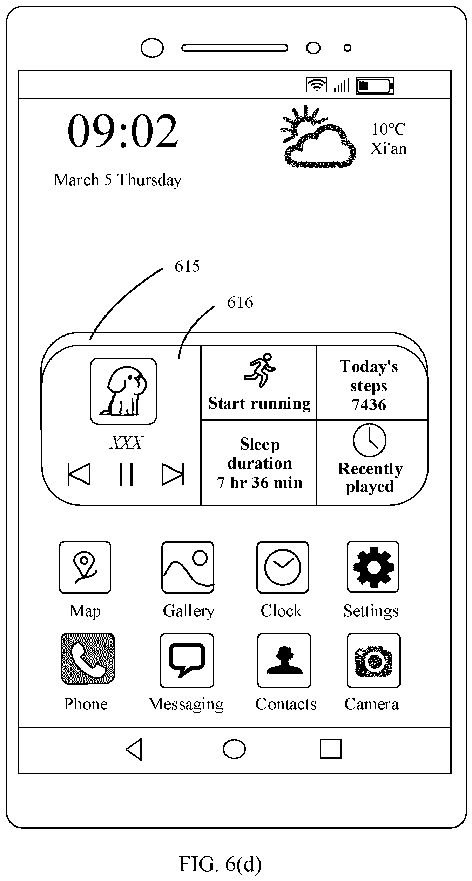

As shown in FIG. 6(c) and FIG. 6(d), after detecting an operation of determining content and a style of a service widget by a user, the electronic device displays a reconstructed service widget on the desktop in response to the operation.

For example, a plurality of reconstructed service widgets may be displayed on the desktop in a stacked manner. As shown in FIG. 6(d), a service widget 616 is above a service widget 615, and an edge of the service widget 615 and the complete service widget 616 are displayed on the desktop.

It should be noted that the service widgets may be displayed in a stacked manner in a plurality of manners. For specific content, refer to the following description.

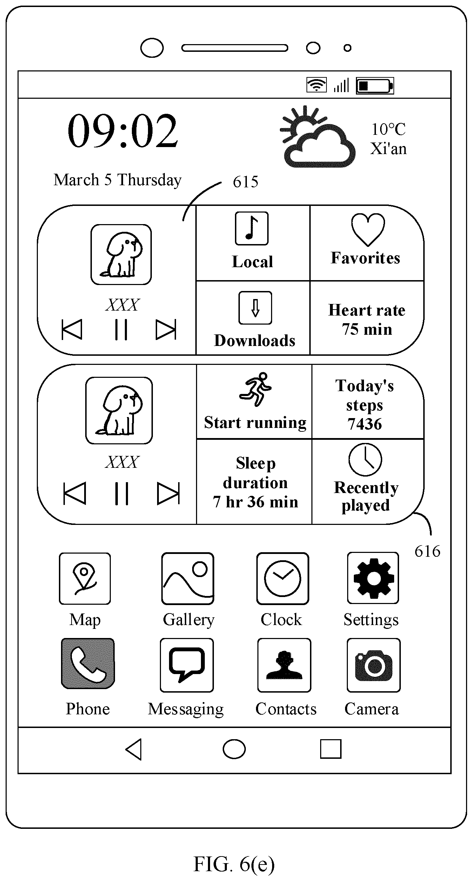

In FIG. 6(a) to FIG. 6(d), an example in which a plurality of reconstructed service widgets may be displayed on the desktop in a stacked manner is used, but this is not limited thereto. Optionally, the plurality of reconstructed service widgets may be alternatively separately displayed on the desktop. As shown in FIG. 6(a), FIG. 6(b), FIG. 6(c), and FIG. 6(e), both the service widget 615 and the service widget 616 are displayed on the desktop simultaneously.

It should be understood that the service widget 615 is a reconstructed service widget of the preview widget 613, and the service widget 616 is a reconstructed service widget of the preview widget 612.

When a display area of the plurality of reconstructed service widgets is larger than the remaining display area of the original interface, the plurality of service widgets may be displayed on a plurality of interfaces, or may be displayed side-by-side on another interface that can accommodate the plurality of service widgets.

In an embodiment of this application, a user may customize a service widget as required, and combine subwidgets of services of different applications, to meet a requirement of the user for using a plurality of applications and a plurality of services in one scenario. The electronic device may simplify a service widget procedure based on the third condition, and generate a plurality of service widgets based on the correlation between the service subwidgets. Operations are simple and feasible.

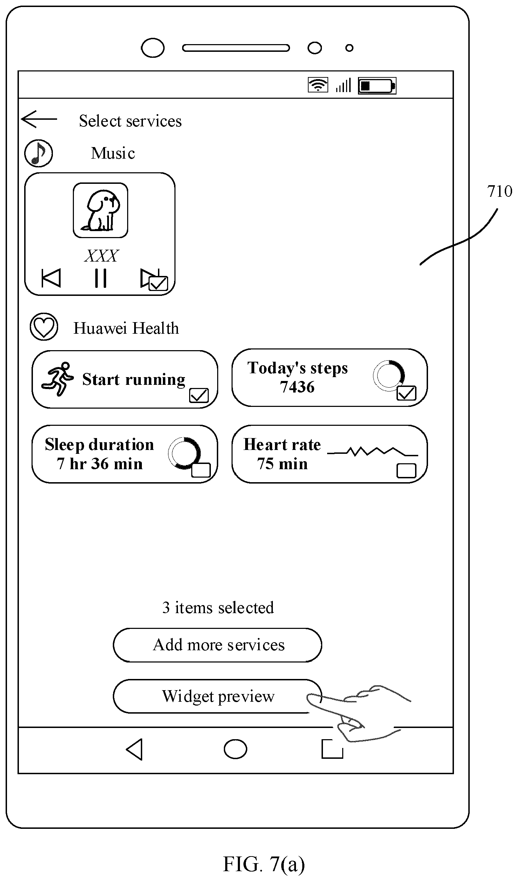

FIG. 7(a) to FIG. 7(f) show another group of GUIs according to an embodiment of this application.

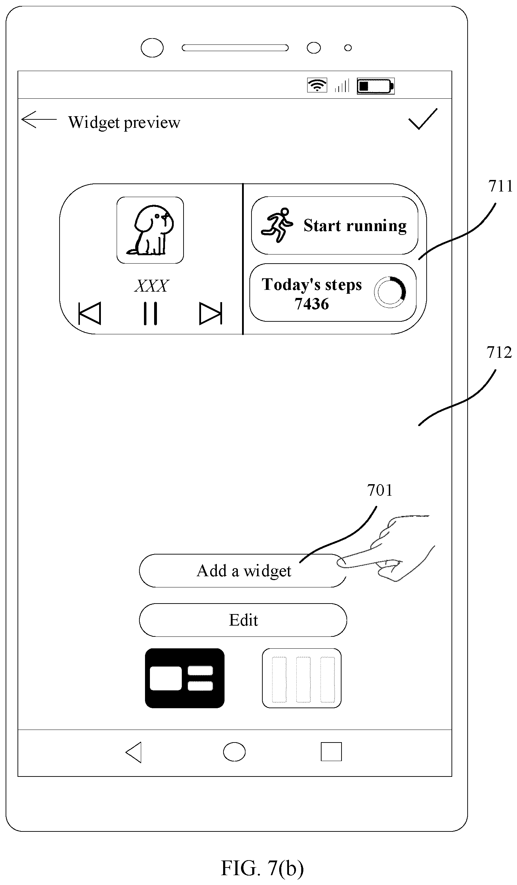

As shown in FIG. 7(a) and FIG. 7(b), after the electronic device enters the service widget reconstruction procedure, a service selection interface 710 is displayed. After the electronic device detects that the user completes an operation of selecting a service, the electronic device may display a widget preview interface 712 in response to the operation. The electronic device displays a preview widget on the widget preview interface 712. Operations of entering the service widget reconstruction procedure by the electronic device and completing service selection are similar to those in the foregoing embodiment. For brevity, details are not described herein again.

As shown in FIG. 7(b), the widget preview interface 712 may include a preview widget 711, and may further include a widget addition control 701. The electronic device detects an operation of tapping the widget addition control 701 by the user, and displays the service selection interface 710 in response to the operation.

For example, the electronic device displays the preview widget 711 on the widget preview interface 712. Service subwidgets of the preview widget are service subwidgets selected by the user on the service selection interface 710, and corresponding services are "Play music", "Start running", and "Today's steps". To generate a plurality of service widgets in one service widget reconstruction procedure, the electronic device displays the service selection interface 710 again in response to an operation of tapping the widget addition control 701 by the user. The user may select service subwidgets, namely, "Play music", "Sleep duration", and "Heart rate", on the service selection interface again.

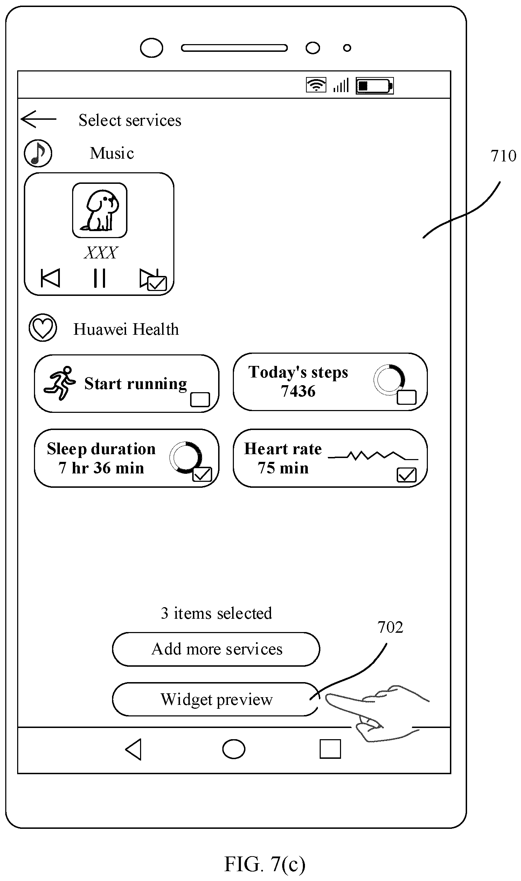

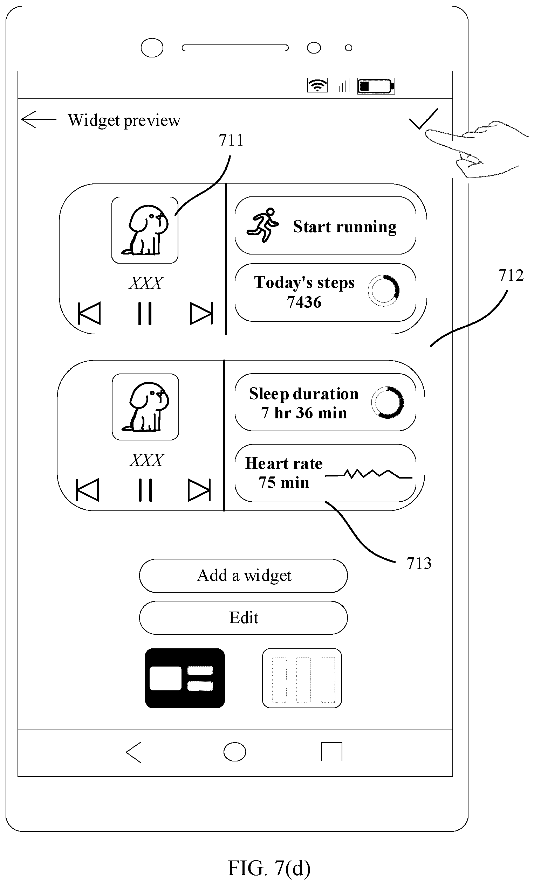

As shown in FIG. 7(c) and FIG. 7(d), after the electronic device detects that the user completes an operation of selecting a service, the electronic device may display the widget preview interface 712 in response to the operation, and the electronic device may display a plurality of preview widgets on the widget preview interface 712. The operation of selecting a service completed by the user is similar to that in the foregoing embodiment. Details are not described herein again.

For example, as shown in FIG. 7(d), the electronic device displays two preview widgets, namely, the preview widget 711 and a preview widget 713, on the widget preview interface 712.

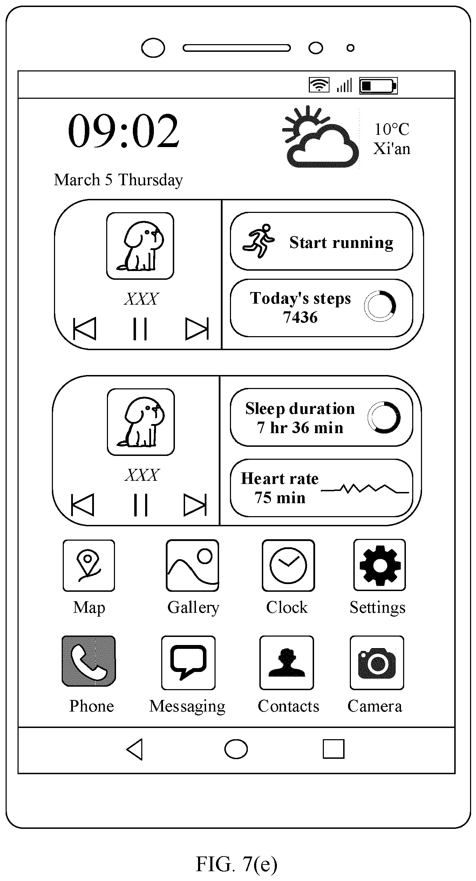

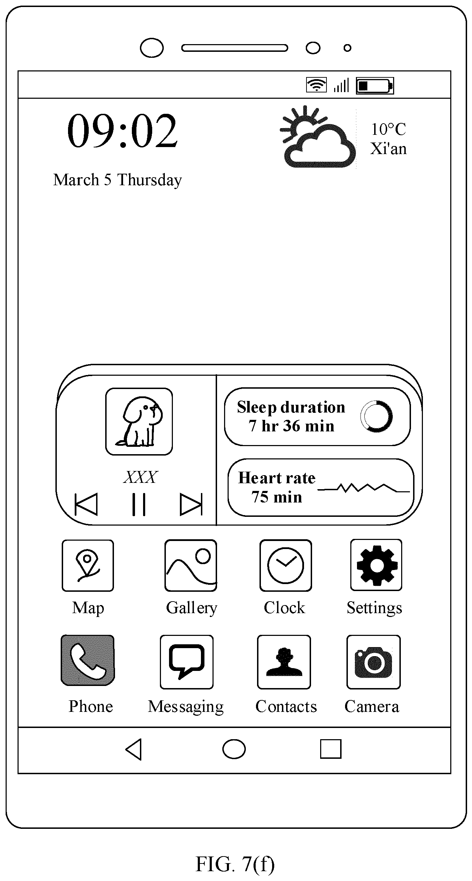

As shown in FIG. 7(e) and FIG. 7(f), after detecting an operation of determining content and a style of a service widget by a user, the electronic device displays a plurality of reconstructed service widgets on the desktop in response to the operation. For descriptions of displaying the service widget style and the service widget on the desktop, refer to the foregoing embodiment. Details are not described herein again.

In an embodiment of this application, a user may customize a service widget as required, and combine subwidgets of services of different applications, to meet a requirement of the user for using a plurality of applications and a plurality of services in one scenario. A user may generate a plurality of service widgets through combination in one service widget reconstruction procedure, so that a requirement of the user for generating a plurality of service widgets simultaneously for service widgets being reconstructed, and operations are simple and feasible.

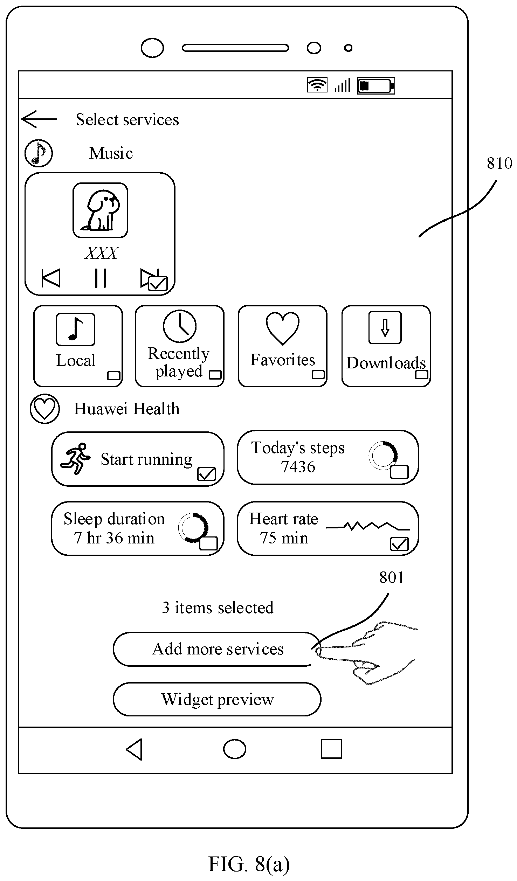

FIG. 8(a) to FIG. 8(d) show another group of GUIs according to an embodiment of this application.

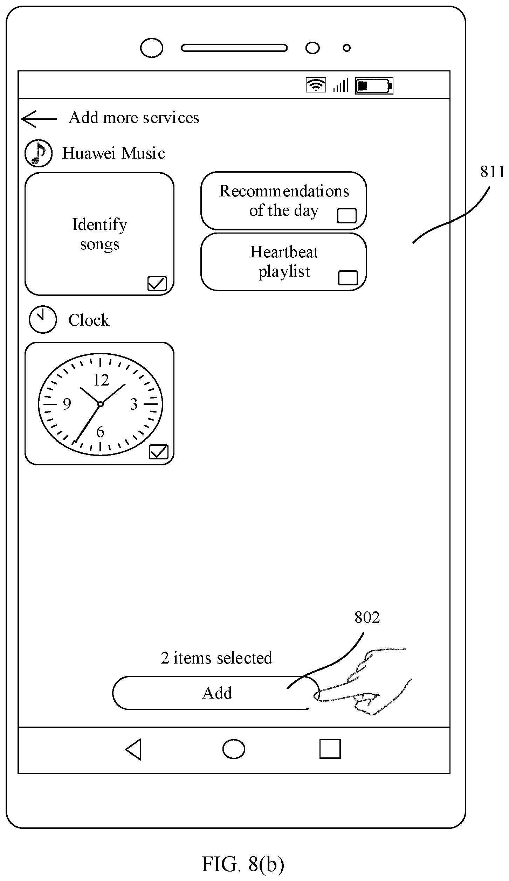

As shown in FIG. 8(a) and FIG. 8(b), after the electronic device enters the service widget reconstruction procedure, a service selection interface 810 may be displayed. The service selection interface 810 may include subwidgets of all services of the reconstructed service widget, and may further include a control 801 for adding more services. The electronic device detects an operation of adding more services by the user, and the electronic device may display a more service interface 811 in response to the operation. For descriptions of entering the service widget reconstruction procedure by the electronic device, refer to the foregoing embodiment. Details are not described herein again.

For example, an operation of adding more services by the user may be that the user taps the control 801 for adding more services on the service selection interface 810.

As shown in FIG. 8(b), the electronic device displays a more service selection interface 811 in response to the operation of adding more services by the user.

For example, the more service selection interface 811 may include a service subwidget other than service subwidgets being reconstructed. For example, as shown in FIG. 8(a), the service subwidgets being reconstructed are respectively "Play music", "Local", "Recently played", "Favorites", "Downloads", "Start running", "Today's steps", "Sleep duration", and "Heart rate". The more service interface 811 may display service subwidgets other than the foregoing service subwidgets, for example, "Identify songs", "Recommendations of the day", "Heartbeat playlist", and "Clock".

Optionally, the electronic device may display, on the more service interface 811, the service subwidgets by application category based on applications to which the service subwidgets belong. For descriptions of displaying subwidgets by application category, refer to the foregoing embodiment. Details are not described herein again. Alternatively, the electronic device may preferentially display, on the more service interface 811 based on the correlation between the service subwidgets, a service subwidget that is highly correlated to a selected widget. Further alternatively, the electronic device may preferentially display, on the more service interface 811 based on use frequencies of services, a service subwidget that is frequently used.

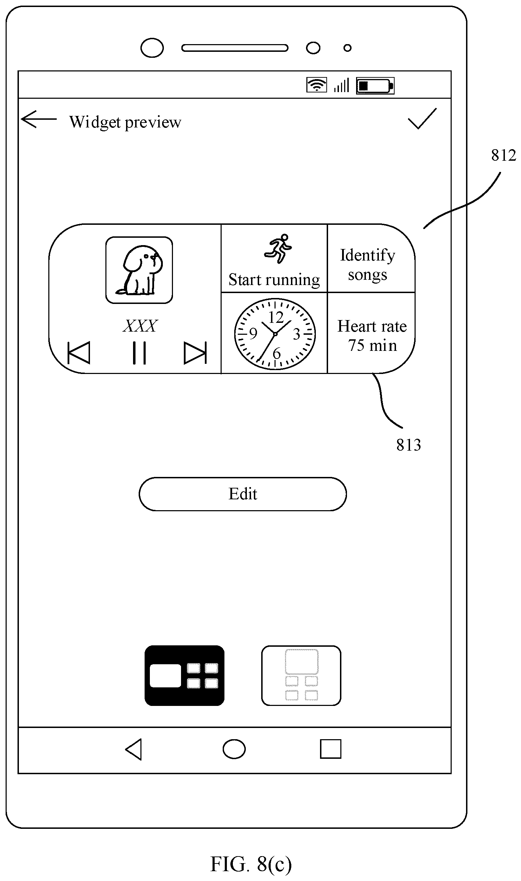

As shown in FIG. 8(b) and FIG. 8(c), after the electronic device detects that the user completes an operation of selecting more services, the electronic device may display a widget preview interface 812 in response to the operation.

For example, an operation of selecting more services completed by the user may be that the user taps an addition key 802 on a more service interface.

The widget preview interface 812 may include a preview widget 813. As shown in FIG. 8(a) to FIG. 8(c), the user selects three service subwidgets on the service selection interface 810, and selects two service subwidgets on the more service interface 811. The electronic device displays the preview widget 813 on the widget preview interface 812 in response to an operation of selecting more services completed by the user.

Optionally, when a quantity of service subwidgets obtained after the user adds more service subwidgets is greater than a first threshold, the electronic device may prompt that the quantity of service subwidgets exceeds the first threshold.

Optionally, when a quantity of service subwidgets obtained after the user adds more service subwidgets is greater than a first threshold, the electronic device may display a plurality of preview widgets on the widget preview interface based on a correlation between the service subwidgets.

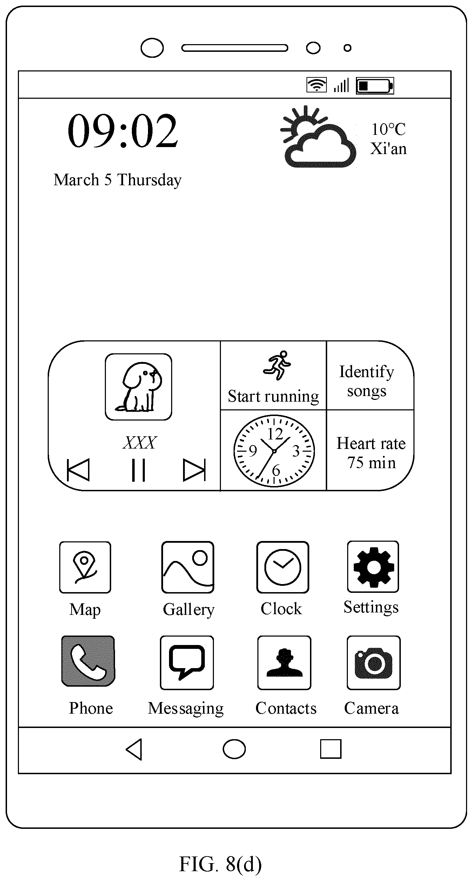

As shown in FIG. 8(d), after detecting an operation of determining content and a style of a service widget by a user, the electronic device displays a reconstructed service widget on the desktop in response to the operation.

In an embodiment of this application, a user may customize a service widget as required, and combine subwidgets of services of different applications, to meet a requirement of the user for using a plurality of applications and a plurality of services in one scenario. A user may add, as required, a service subwidget that does not belong to an original service widget during service widget reconstruction. This increases selectability of the user and combinability of service widgets, and operations are simple and feasible.

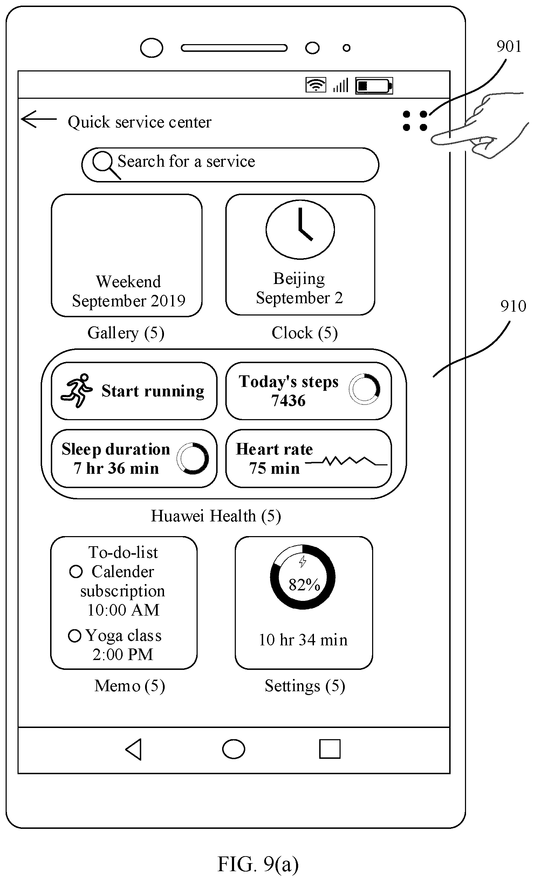

FIG. 9(a) to FIG. 9(c) show another group of GUIs according to an embodiment of this application.

The electronic device may enter a service widget reconstruction procedure in response to the first operation and the second operation by the user, or may enter a service widget reconstruction procedure through a quick service center.

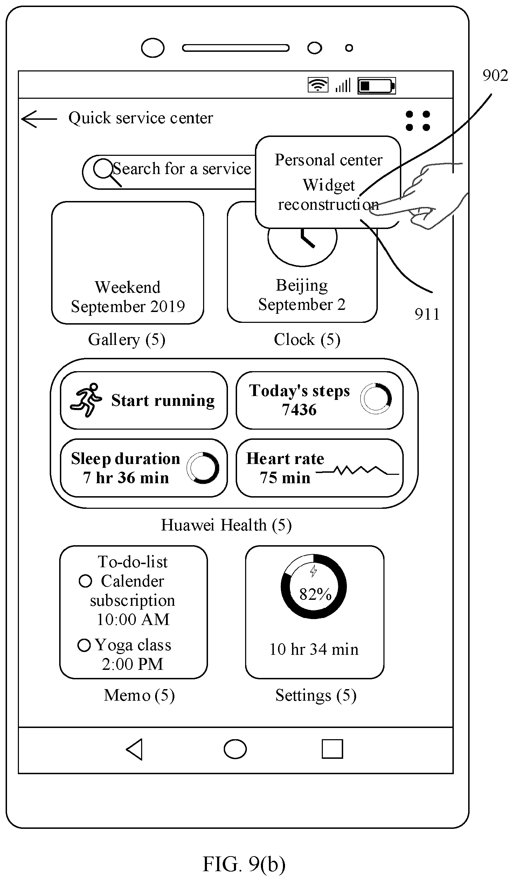

As shown in FIG. 9(a) and FIG. 9(b), the electronic device may enter the service widget reconstruction procedure through the quick service center.

For example, the electronic device may display a quick service center interface 910 in response to tapping, by the user, a control, for example, an icon, used to display the quick service center. The control, for example, the icon, may be placed on a desktop, a HiBoard, a control center, or a lock screen interface.

The quick service center interface 910 may include a plurality of service widgets, and the plurality of service widgets may be service widgets that have been reconstructed, or may be preset service widgets. For example, there are a total of five preset service widgets in "Huawei Health". The electronic device displays the five preset service widgets on the quick service center interface 910 in a stacked manner, and prompts, below the service widgets, applications to which the service widgets belong, and may further prompt a quantity of stacked service widgets.

As shown in FIG. 9(a) and FIG. 9(b), the electronic device detects an operation of determining, by the user, to enter the service widget reconstruction procedure, and enters the service widget reconstruction procedure in response to the operation.

For example, the operation of determining, by the user, to enter the service widget reconstruction procedure may be: tapping, by the user, a control 901 of the quick service center, to trigger the electronic device to display an operation prompt interface 911, and then tapping, by the user, a widget reconstruction key 902 on the operation prompt interface 911.

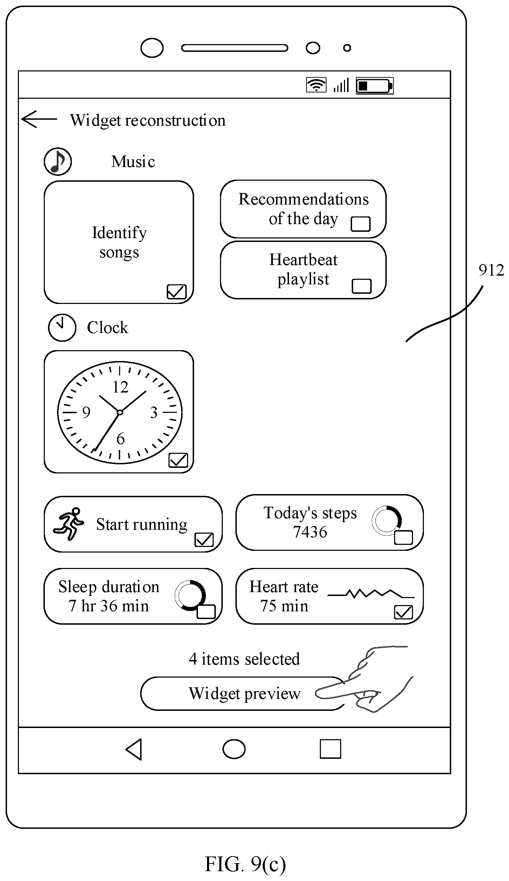

As shown in FIG. 9(b) and FIG. 9(c), after entering the service widget, the electronic device may display a service selection interface 912.

For example, the service selection interface 912 may display subwidgets of all services in the electronic device. For example, as shown in FIG. 9(c), the electronic device enters the service widget reconstruction procedure through the quick service center, and the electronic device may display, on the service selection interface 912, subwidgets of all services on the quick service center interface 910.

Optionally, the electronic device may display the service subwidgets by category based on applications to which the service subwidgets belong.

Optionally, the electronic device may further sort and display the service subwidgets based on use frequencies of the service subwidgets. For example, a use frequency of "Identify songs" is the highest, a use frequency of "Start running" is the second highest, and a use frequency of "Today's steps" is the third highest. The electronic device may sequentially display "Identify songs", "Start running", and "Today's steps" from top to bottom on the service selection interface 912.

As shown in FIG. 9(c), after the electronic device detects that the user completes an operation of selecting a service, the electronic device may display a widget preview interface in response to the operation. For descriptions of the widget preview interface, refer to the foregoing embodiment. Details are not described herein again.

It should be understood that for descriptions of displaying the reconstructed service widget on the desktop, refer to the foregoing embodiment. Details are not described herein again.

In an embodiment of this application, the user may enter the service widget reconstruction procedure in a form of a global entry, and the user may select service subwidgets as required and reconstruct the service subwidgets to form a service widget, to meet a requirement of the user for using a plurality of applications and a plurality of services in one scenario.

FIG. 3 to FIG. 9(c) describe a service widget reconstruction process. The following describes a widget linkage process.

Widget linkage: Information may be shared between subwidgets of services on a service widget. When the information shared between the subwidgets of the services is matched, the electronic device may associate the subwidgets of the services with each other based on the information, to implement function linkage. For example, the service widget includes subwidgets of two services: "Calendar" and "Recommendations of the day". The "Calendar" subwidget may include date information, and the "Recommendations of the day" subwidget may include date information. The two subwidgets may share date information. "Calendar" and "Recommendations of the day" are associated with each other to implement function linkage. For example, during the Spring Festival, "Recommendations of the day" may recommend music related to the Spring Festival.

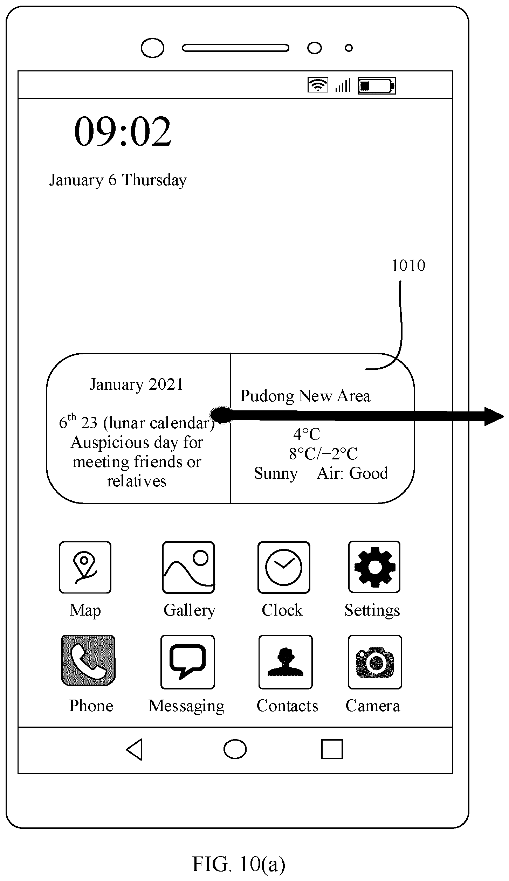

FIG. 10(a) to FIG. 10(d) show another group of GUIs according to an embodiment of this application.

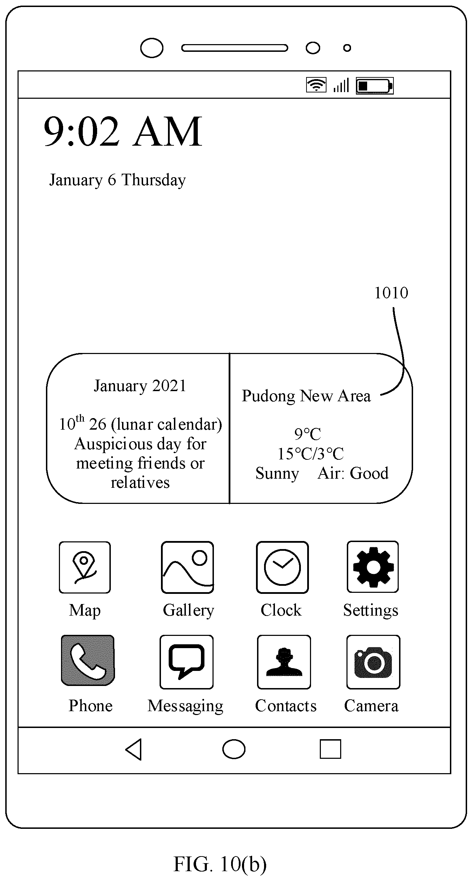

As shown in FIG. 10(a) and FIG. 10(b), a service widget is displayed on a desktop, and a service widget 1010 includes two service subwidgets, namely, "Calendar" and "Today's weather". The "Calendar" subwidget may include date information, and the "Today's weather" subwidget may include date information. The electronic device associates the two subwidgets based on the date information, to implement function linkage. When the date information changes, the two subwidgets may display corresponding interfaces based on the date information.

Optionally, a user may manually change the information of the subwidgets. For example, the user manually changes the date from January 6, 2021 to January 10, 2021, and "Today's weather" synchronously switches the weather to display the weather on January 10, 2021.

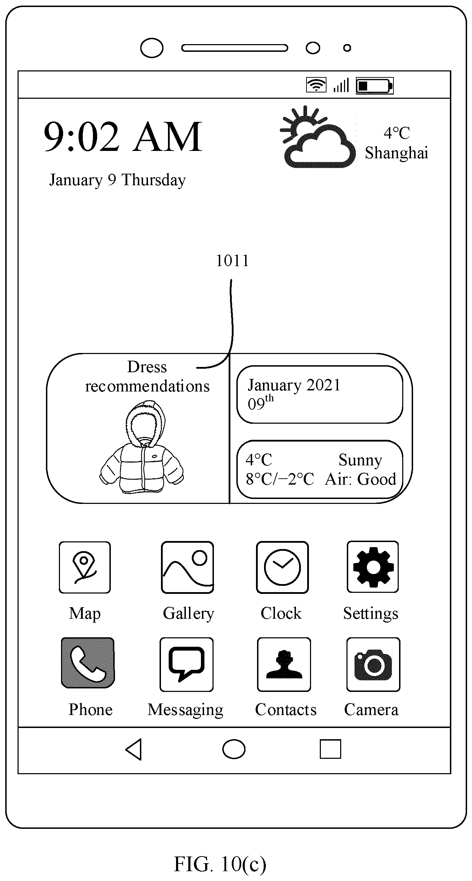

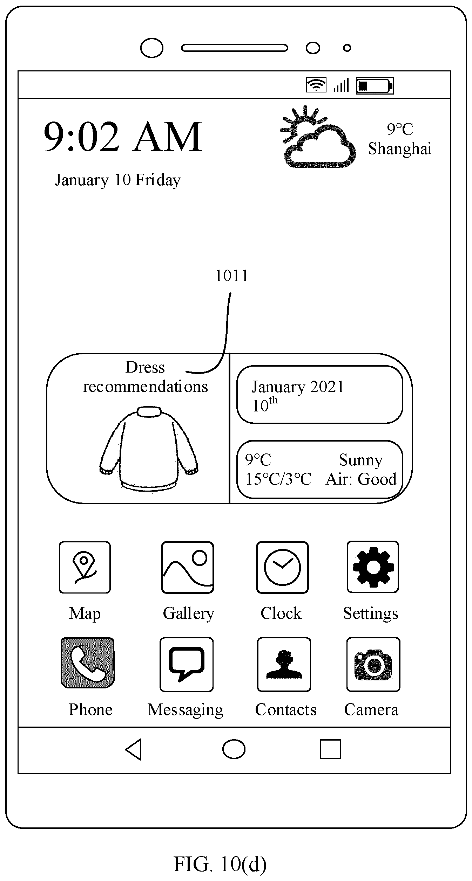

As shown in FIG. 10(c) and FIG. 10(d), a service widget is displayed on a desktop, and a service widget 1011 includes three service subwidgets, namely, "Calendar", "Today's weather", and "Dress recommendations". The "Calendar" subwidget may include location information and date information, the "Today's weather" subwidget may include date information and location information, and the "Dress recommendations" subwidget may include temperature information. The three service subwidgets form one service widget, and the service subwidgets may share the foregoing information. The electronic device associates the three service subwidgets with each other based on the foregoing information, to implement function linkage.

For example, the "Today's weather" subwidget determines temperature information based on date information and location information that are shared by the "Calendar" subwidget, and the "Dress recommendations" service may display a dress combination based on the location information and the temperature information.

In an embodiment of this application, widget linkage may be manually triggered by the user, as shown in FIG. 10(a) and FIG. 10(b). The user manually changes a date to view weather. Alternatively, widget linkage may be automatically triggered, as shown in FIG. 10(c) and FIG. 10(d). As a date and a location change, a temperature is automatically updated and a dress combination is recommended.

In an embodiment of this application, information may be shared between service subwidgets of a service widget. When the shared information is matched, subwidget linkage can be implemented, to improve user experience and meet a requirement of the user for using a plurality of applications and a plurality of services in one scenario.

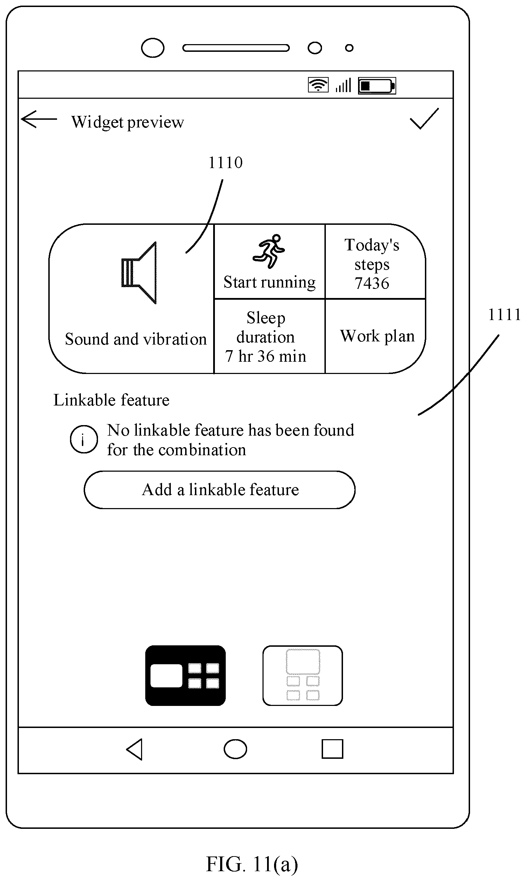

FIG. 11(a) to FIG. 11(c) show another group of GUIs according to an embodiment of this application.

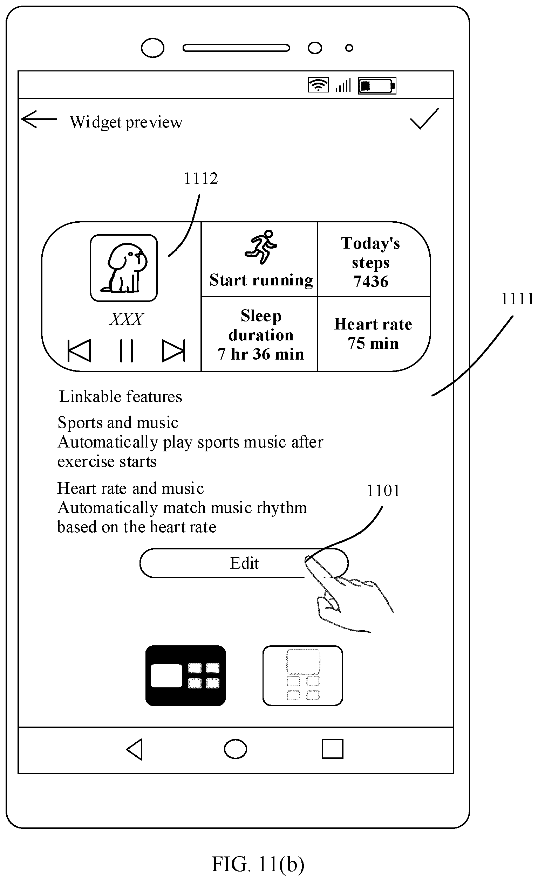

As shown in FIG. 11(a) and FIG. 11(b), the widget preview interface may display whether widget linkage is formed between preview widgets.

For example, as shown in FIG. 11(a), a preview card interface 1111 includes a preview widget 1110, the preview widget 1110 includes subwidgets of five services, and no linkable feature is formed for the subwidgets of the five services. The preview card interface 1111 may display "No linkable feature has been found for the combination". As shown in FIG. 11(b), the preview card interface 1111 includes a preview widget 1112, and the preview widget 1112 includes subwidgets of five services. A total of two linkable features are formed for the subwidgets of the five services. The preview card interface 1111 may display introduction information of the two linkable features. For example, a "Sports and music" linkable feature is "Automatically play sports music after exercise starts". For example, a "Heart rate and music" linkable feature is "Automatically match music rhythm based on the heart rate".

Optionally, when no linkable feature is formed for subwidgets of services of the preview widget, the widget preview interface may display a linkable feature addition control. For details, see the following description.

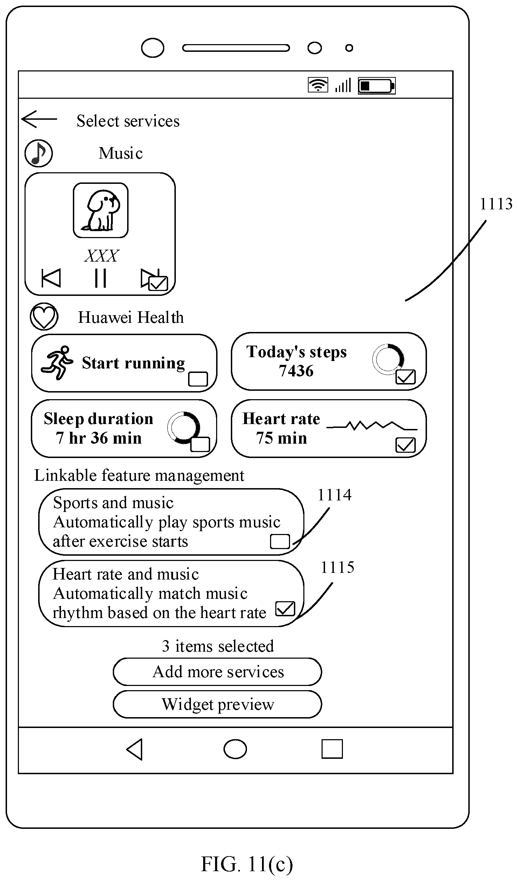

As shown in FIG. 11(b) and FIG. 11(c), after detecting an operation of selecting, by the user, to edit a preview service widget, the electronic device enters a preview widget editing procedure in response to the operation.

For example, an operation of selecting, by the user, to edit a preview service widget may be that the user taps an edit key 1101 on the preview card interface 1111.

Optionally, the widget preview interface may further include a widget style icon. For descriptions of the widget style icon, refer to the foregoing embodiment. Details are not described herein again.

As shown in FIG. 11(c), after entering the preview widget editing procedure, the electronic device may display a service selection interface 1113.

For example, the service selection interface 1113 may include all service subwidgets of a reconstructed service widget, and may further include a control for a linkable feature. For example, as shown in FIG. 11(c), a preview widget 1113 forms two linkable features, and the electronic device may display a "Sports and music" key 1114 and a "Heart rate and music" key 1115 on the service selection interface 1113.

As shown in FIG. 11(c), the user may select a service subwidget on the service selection interface 1113, and may further select a linkable feature.

When the electronic device detects that the service subwidget selected by the user can form a linkable feature, the electronic device may automatically select a control corresponding to the linkable feature. For example, as shown in FIG. 11(c), the electronic device detects that the user selects three service subwidgets "Play music", "Today's steps", and "Heart rate" on the service selection interface 1113, and the electronic device detects that a linkable feature "Heart rate and music" may be formed for "Play music" and "Heart rate", and the electronic device automatically selects the "Heart rate and music" key 1115.

When the electronic device detects a linkable control selected by the user, the electronic device may automatically select a service subwidget corresponding to the linkable feature. For example, the electronic device detects that the user taps the "Heart rate and music" key 1115 on the service selection interface 1113 to select the linkable feature "Heart rate and music". In response to a tap operation, the electronic device automatically selects two service subwidgets "Play music" and "Heart rate". Optionally, the user may further select another service subwidget (for example, the user further selects a "Today's steps" subwidget).

When the electronic device detects that the user cancels selection of the service subwidget corresponding to the linkable feature, the electronic device may automatically cancel selection of the control corresponding to the linkable feature. For example, if the electronic device detects that the user taps "Start running" in a selected state on the service selection interface to cancel selection of the "Start running" service subwidget, the electronic device automatically cancels selection of the "Sports and music" key 1114 in response to a tap operation, and the "Sports and music" key 1114 changes from a selected state to an unselected state.

It should be understood that for descriptions of displaying the reconstructed service widget on the desktop, refer to the foregoing embodiment. Details are not described herein again.

In an embodiment of this application, information may be shared between service subwidgets of a service widget. When the shared information is matched, subwidget linkage can be implemented, to improve user experience and meet a requirement of the user for using a plurality of applications and a plurality of services in one scenario. The user can select all linkable features or some linkable features. Operations are simple and feasible.

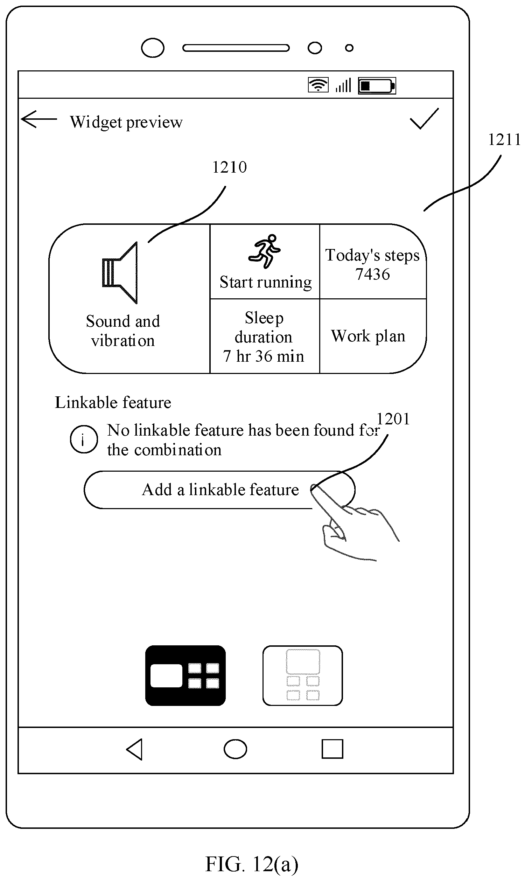

FIG. 12(a) to FIG. 12(d) show another group of GUIs according to an embodiment of this application.

As shown in FIG. 12(a), a preview widget may be displayed on a preview card interface. When no linkable feature is formed for the preview widget, the electronic device may further display a control for adding a linkable feature.

For example, the control for adding a linkable feature may be adding a linkable feature key 1201. For example, as shown in FIG. 12(a), a preview widget 1210 includes subwidgets of five services, and no linkable feature is formed for the subwidgets of the five services. The electronic device may display, on a widget preview interface 1211, a linkable feature addition key 1201.

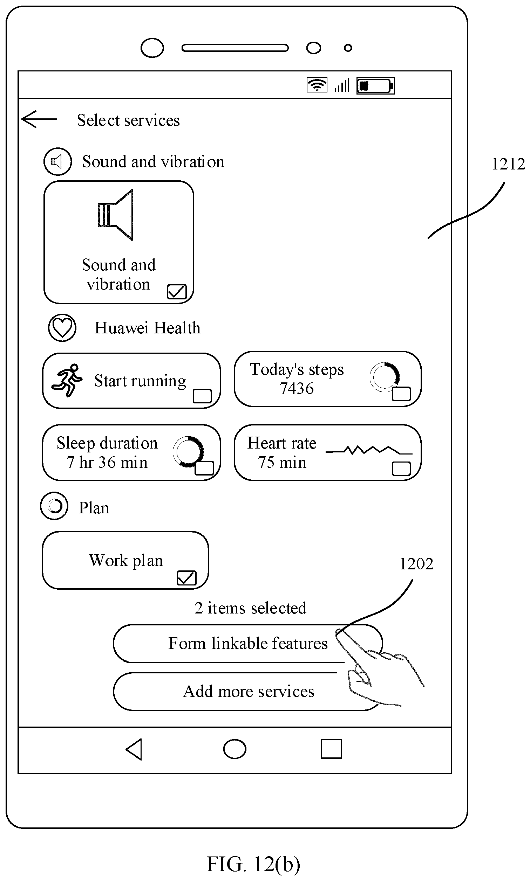

As shown in FIG. 12(a) and FIG. 12(b), the electronic device detects an operation of adding a linkable feature by the user, and enters a linkable feature addition procedure in response to the operation.

For example, the control for adding a linkable feature by the user may be tapping the linkable feature addition key 1201 by the user.

As shown in FIG. 12(a) and FIG. 12(b), after the electronic device enters the linkable feature addition procedure, the electronic device may display a service selection interface 1212.

The service selection interface 1212 may include all service subwidgets of the preview widget 1210, and may further include a linkable feature formation key 1202.

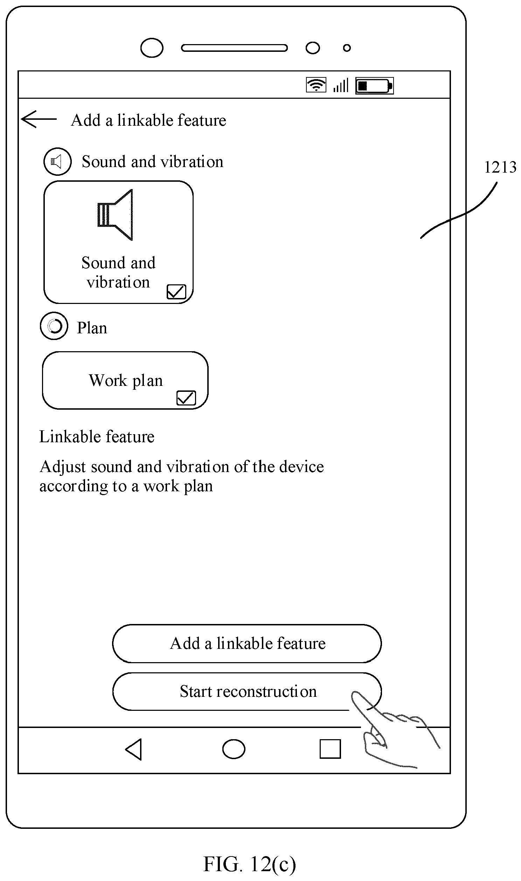

As shown in FIG. 12(b) and FIG. 12(c), after the electronic device detects that the user completes an operation of selecting a service, the electronic device may display a linkable feature addition interface in response to the operation.

For example, an operation of selecting a service completed by the user may be that the user taps the linkable feature formation key 1202 on the service selection interface 1212. For example, as shown in FIG. 12(b) and FIG. 12(c), the user selects two service subwidgets "Sound and vibration" and "Work plan" on the service selection interface, and the electronic device displays a linkable feature addition interface 1213 in response to an operation of tapping the linkable feature formation key 1202 by the user.

As shown in FIG. 12(c), the linkable feature addition interface 1213 may display a service subwidget selected by the user, and may further display introduction information of a linkable feature based on the service subwidget selected by the user.

It should be understood that, when the electronic device detects an operation of adding a linkable feature by the user, the electronic device may recommend a linkable feature for a service subwidget that cannot share information according to a rule set by the user or the system.

For example, as shown in FIG. 12(b) and FIG. 12(c), the user selects two service subwidgets "Sound and vibration" and "Work plan" on the service selection interface. The "Work plan" subwidget may include "date" information and "plan" information, and the "Sound and vibration" subwidget cannot match the "date" information and the "plan" information. In response to an operation of tapping the linkable feature formation key 1202 by the user, the electronic device may associate "Work plan" and "Sound and vibration" according to a rule set by the user or the system to implement function interaction, and display "Adjust sound and vibration of the device according to a work plan" on the linkable feature addition interface 1213.

For example, a method for setting linkage for service subwidgets according to the rule set by the system may be:
When the "Work plan" subwidget includes "date" information and "plan" information (for example, a meeting or exercise), and the "Sound and vibration" subwidget includes "Sound and vibration" information (for example, mute, vibration, or ringing), the electronic device may associate the "date" information and the "plan" information in the "Work plan" subwidget with the "Sound and vibration" information in the "Sound and vibration" subwidget. The electronic device may collect statistics on and analyze a use habit of the user, and determine that when the "plan" information is a meeting, corresponding "Sound and vibration" information is "mute"; or when the "plan" information is exercise, corresponding "Sound and vibration" information is "ringing".

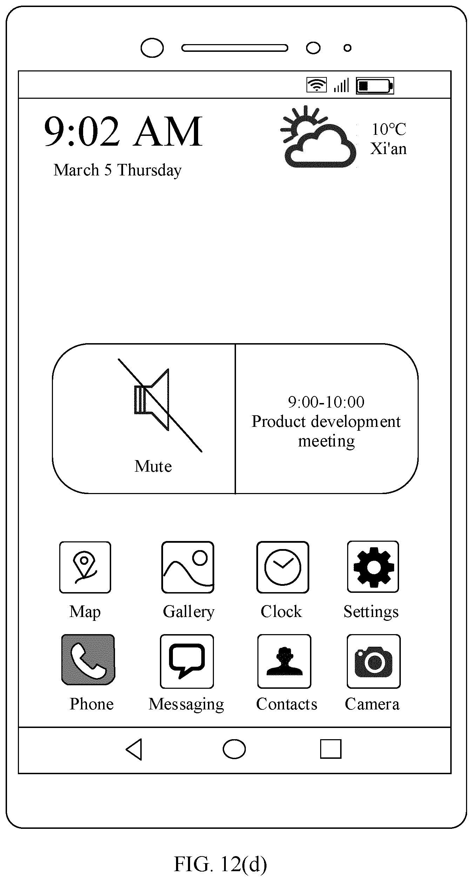

As shown in FIG. 12(d), after detecting an operation of determining content and a style of a service widget by a user, the electronic device displays a reconstructed service widget on the desktop in response to the operation.

For example, the electronic device may automatically adjust a status of the electronic device to a muted state based on a product development time of 9:00 to 10:00.

In an embodiment of this application, when information shared between service subwidgets of a service widget cannot be matched, a linkable feature may be added by using a rule preset by a user or a rule preset by a system, to improve user experience and meet a requirement of the user for using a plurality of applications and a plurality of services in one scenario.

The foregoing FIG. 11(a) and FIG. 12(d) describe a widget linkage process of service widgets. The following describes a service widget stacking process.

A desktop has a limited display area, in which both application icons and service widgets need to be arranged. If all service widgets are displayed on the desktop, many interfaces are generated, resulting in complexity when a user makes a search. Based on this, an embodiment of this application provides a service widget stacking method. A user may stack a plurality of service widgets for displaying in a same display area, to effectively use a limited display area. The user may perform operations on a service widget displayed on an interface to enter a service widget stacking procedure. The operations are simple and feasible.

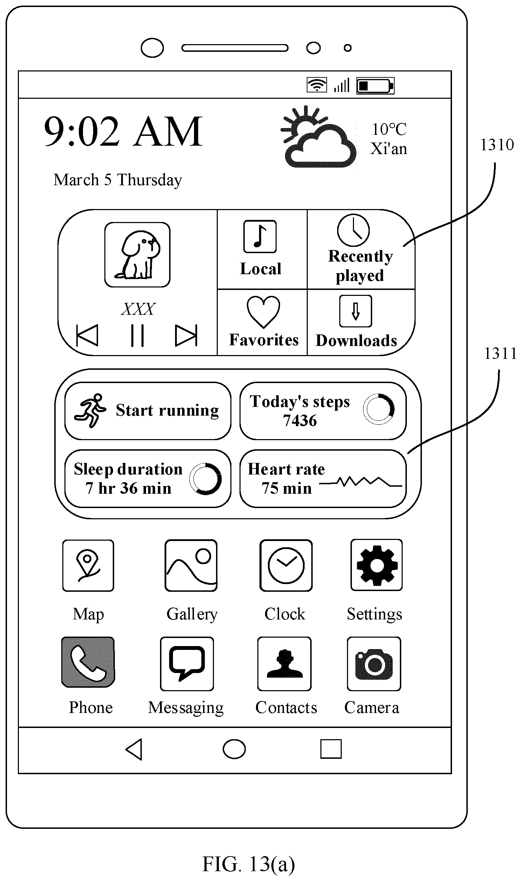

FIG. 13(a) to FIG. 13(f) show another group of GUIs according to an embodiment of this application.

As shown in FIG. 13(a), a plurality of service widgets are displayed on the desktop. For descriptions of a service widget 1310 and a service widget 1311, refer to the foregoing embodiment. Details are not described herein again.

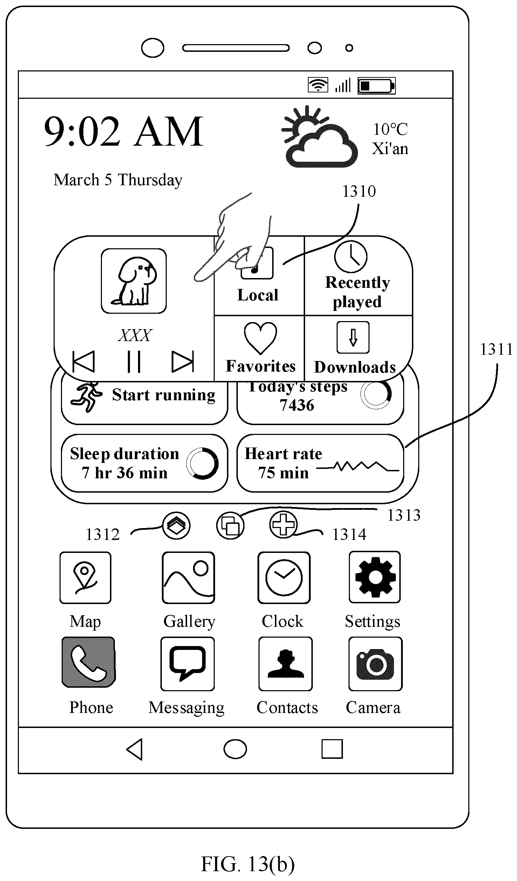

As shown in FIG. 13(b), when detecting a first operation by the user, the electronic device may display a stacking icon 1312 in response to the first operation. For descriptions of the first operation, refer to the foregoing embodiment. Details are not described herein again.

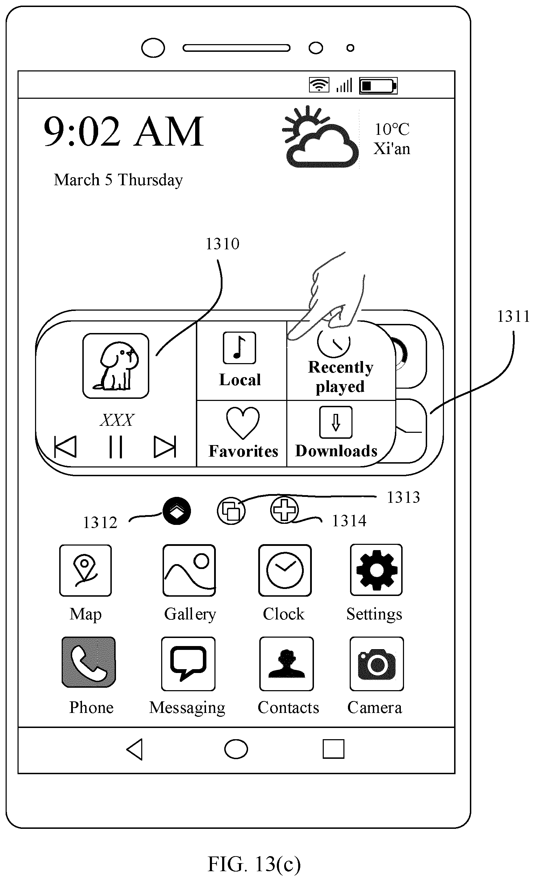

As shown in FIG. 13(c), after detecting a third operation of selecting the stacking icon 1312 by the user, the electronic device completes service widget stacking in response to the third operation.

The third operation may be dragging one service widget by the user to another service widget and moving a finger away from a screen. One service widget may be completely above a display area of another service widget, or one service widget may be partially above a display area of another service widget. Optionally, the electronic device may highlight the stacking icon 1312, so that the user knows that in this case, the service widget stacking is to be completed when the finger leaves the screen.

For example, as shown in FIG. 13(c), after the electronic device displays the stacking icon, the electronic device detects that the user continues to hold down the service widget 1310 and drags the service widget 1310 downward until the service widget 1310 is completely above a display area of the service widget 1311. In this case, the stacking icon 1312 is highlighted. In this case, if the electronic device detects that the finger of the user leaves the screen, the electronic device completes the service widget stacking.

It should be noted that, when the electronic device displays a plurality of icons such as the stacking icon 1312, a reconstruction icon 1313, and an orchestration icon 1314, the user may drag a widget to select a corresponding icon as required. As shown in FIG. 13(c), after the service widget 1310 is dragged above the service widget 1311, the electronic device sequentially displays the stacking icon 1312, the reconstruction icon 1313, and the orchestration icon 1314 from left to right. The stacking icon 1312 is in a selected state. In this case, the user may drag the service widget 1310 to the right to select the reconstruction icon 1313, and further drag the widget to the right to select the orchestration icon 1314.

It should be understood that, in an embodiment of this application, the third operation for selecting the stacking icon may be set by the user or the system. This is not limited in this application. The third operation is also not limited to the example shown in FIG. 4(a) to FIG. 4(g).

It should be noted that, in the foregoing embodiment, an example in which the first operation and the third operation form one complete operation is used for description. It may be understood that the first operation and the third operation may be two separate operations.

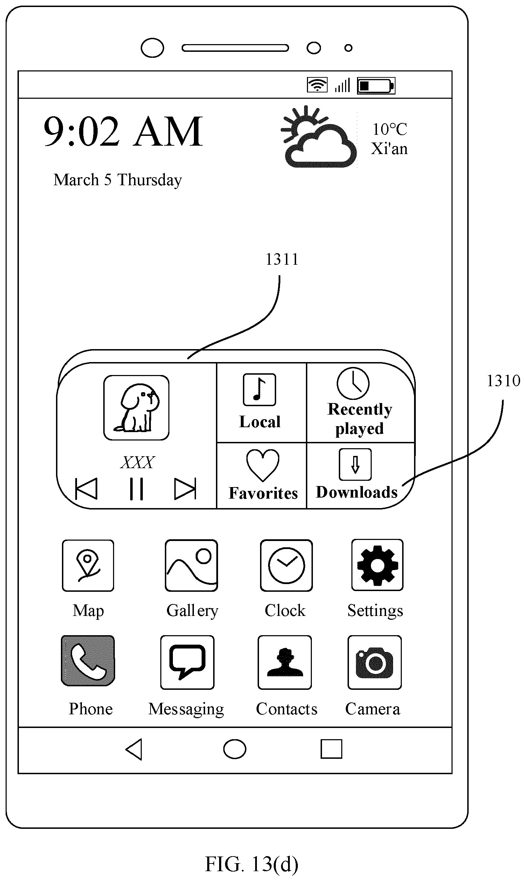

As shown in FIG. 13(d), the stacked service widgets are displayed on the desktop.

For example, the electronic device displays the complete service widget 1310 and an edge of the service widget 1311 on the desktop.

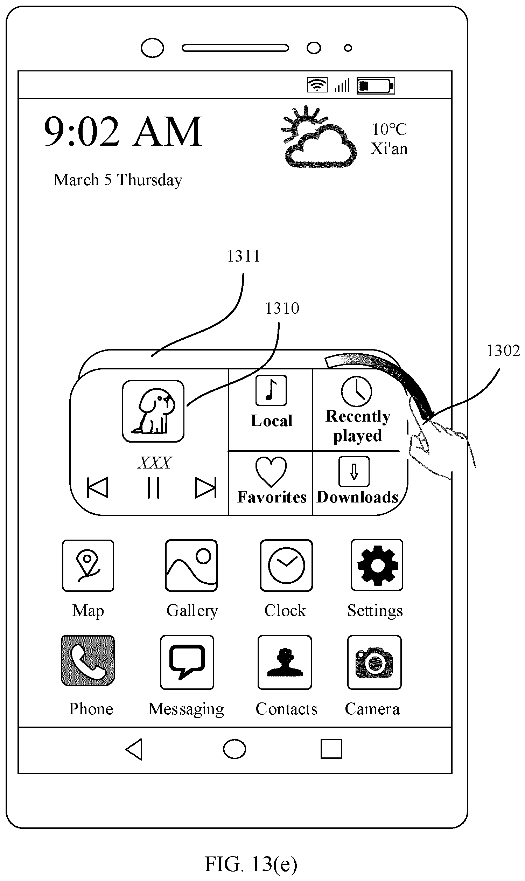

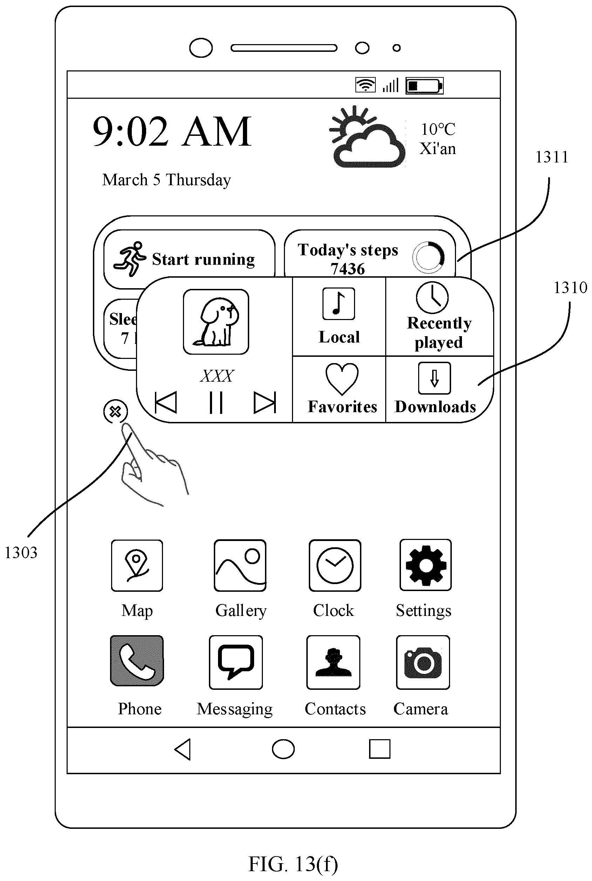

As shown in FIG. 13(e) and FIG. 13(f), after detecting a fourth operation, the electronic device may enter a stacked service widget switching procedure in response to the operation.

For example, the fourth operation may be drawing an arc in a display area of the stacked service widgets by the user, and/or swiping down in a display area of the stacked service widgets by the user. For example, as shown in FIG. 13(e) and FIG. 13(f), the electronic device displays, on the desktop, the stacked service widget 1310 and a part of the stacked service widget 1311 in response to the operation of drawing an arc on the stacked service widgets by the user. When detecting that the user taps the service widget 1311, the electronic device may display the service widget 1311 on the top in response to the operation.

As shown in FIG. 13(f), the electronic device detects an operation of exiting the stacked service widget switching procedure by the user, and exits the stacked service widget switching procedure in response to the operation.

For example, the operation of exiting the stacked service widget switching procedure by the user may be tapping a cancel key 1303 by the user. For example, as shown in FIG. 13(f), the electronic device returns, in response to the operation of tapping the cancel key 1303 by the user, to the desktop shown in FIG. 13(d).

Alternatively, the electronic device may exit the stacked service widget switching procedure after no operation by the user on the service widget is detected within a preset time. The following describes display manners of different stacked service widgets. To clearly describe a display manner of the stacked service widgets and a service widget switching procedure, a desktop is omitted in the following description, and only an operation on the stacked service widgets is displayed.

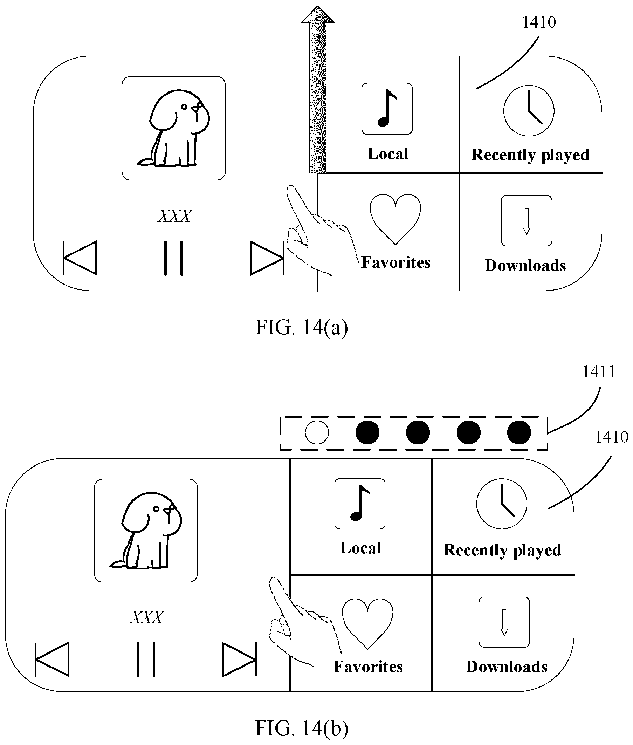

FIG. 14(a) to FIG. 14(e) show another group of GUIs according to an embodiment of this application.

Operations of completing service widget stacking are similar to those in the foregoing embodiment. For brevity, details are not described herein again.

As shown in FIG. 14(a) and FIG. 14(b), after detecting a fourth operation by a user, the electronic device enters a stacked service widget switching procedure in response to the fourth operation.

For example, the fourth operation may be: swiping, by the user, in a display area of the service widget. For example, as shown in FIG. 14(a) and FIG. 14(b), the electronic device enters a stacked service widget switching procedure in response to an operation of swiping up in a display area of a service widget 1410 by the user.

As shown in FIG. 14(b), after the electronic device enters the stacked service widget switching procedure, the electronic device may display a widget indicator 1411, to indicate a total quantity of stacked service widgets and a location relationship between a currently displayed service widget and another service widget.

For example, as shown in FIG. 14(b), there are a total of five stacked service widgets, and a blank point of the widget indicator 1411 is on the leftmost side, which may indicate that the service widget 1410 is the first service widget in the five stacked service widgets.

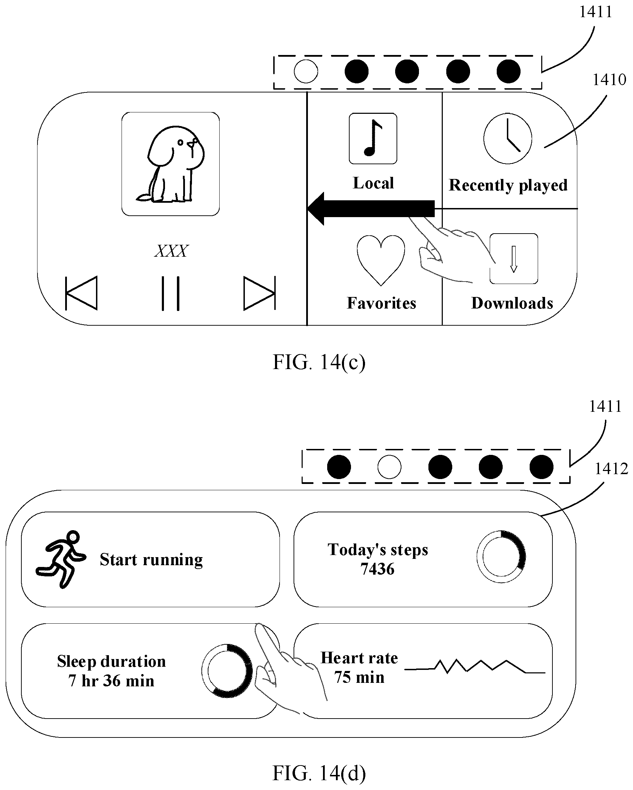

As shown in FIG. 14(c) and FIG. 14(d), the electronic device detects an operation of switching a service widget by the user, and displays a different service widget in response to the operation.

For example, the operation of switching a service widget by the user may be swiping a single finger (or a plurality of fingers) in the display area of the service widget by the user, and the user taps an indication point on a widget indicator. For example, as shown in FIG. 14(c) and FIG. 14(d), the electronic device displays a service widget 1412 in response to swiping left in the display area of the service widget 1410 by the user.

Optionally, the widget indicator 1411 may display a location relationship between the switched service widget and another service widget. For example, as shown in FIG. 14(d), the second point of the widget indicator 1411 from left to right is a blank point, and it may indicate that the service widget 1412 is the second service widget in the five stacked service widgets.

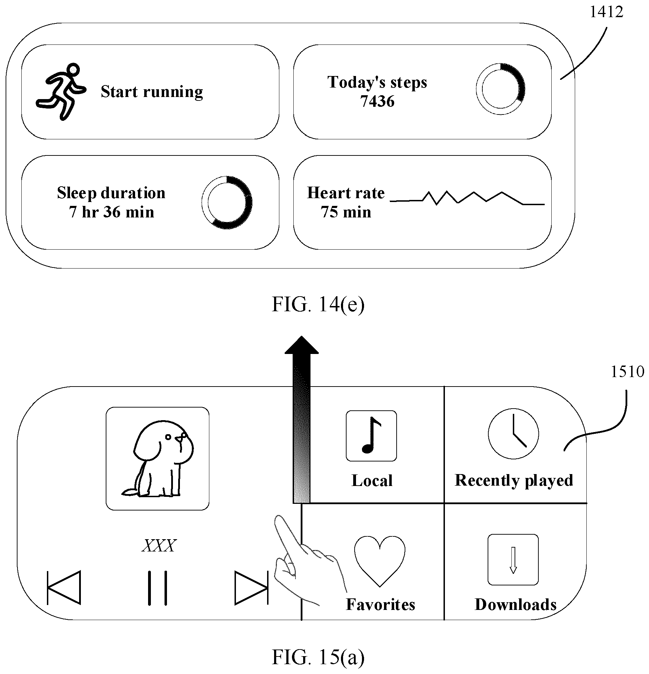

As shown in FIG. 14(e), the electronic device exits the stacked service widget switching procedure after no more operation by the user on the service widget is detected.

For example, the electronic device exits the stacked service widget switching procedure after no operation by the user on the service widget 1412 is detected within a preset time.

Optionally, after the electronic device detects no operation performed by the user on the service widget 1412 within the preset time, the electronic device may hide the widget indicator 1411.

It should be noted that, in the foregoing embodiment, an example in which the fourth operation and the operation of switching a service widget form one complete operation is used for description. It may be understood that the fourth operation and the operation of switching a service widget may be two separate operations.

FIG. 15(a) to FIG. 15(d) show another group of GUIs according to an embodiment of this application.

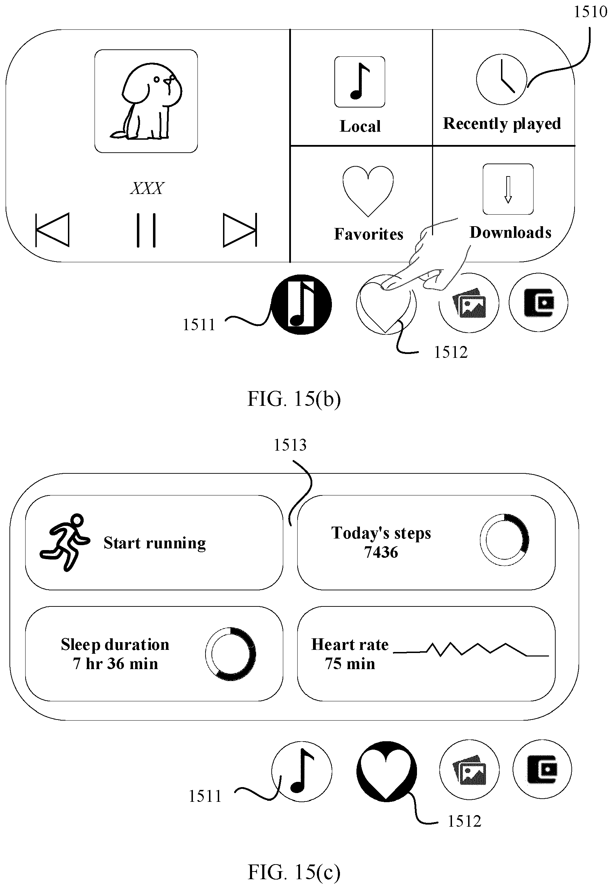

As shown in FIG. 15(a) and FIG. 15(b), after detecting a fourth operation by a user, the electronic device enters a stacked service widget switching procedure in response to the fourth operation. For descriptions of the fourth operation, refer to the foregoing embodiment. Details are not described herein again.

As shown in FIG. 15(b), after the electronic device enters the stacked service widget switching procedure, the electronic device may display an application icon.

For example, a service widget 1510 is a music service widget. After the electronic device enters the stacked service widget switching procedure, the electronic device may display a music application icon 1511 below the service widget 1510.

Optionally, the electronic device may highlight an application icon for the information of the user.

As shown in FIG. 15(c), the electronic device detects an operation of switching a service widget by the user, and displays a different service widget in response to the operation.

For example, the operation of switching a service widget by the user may be swiping a single finger (or a plurality of fingers) in the display area of the service widget by the user or tapping the application icon by the user. For example, as shown in FIG. 15(b) and FIG. 15(c), the electronic device switches the service widget 1510 to a service widget 1513 in response to an operation of tapping a Huawei Health application icon 1512 by the user.

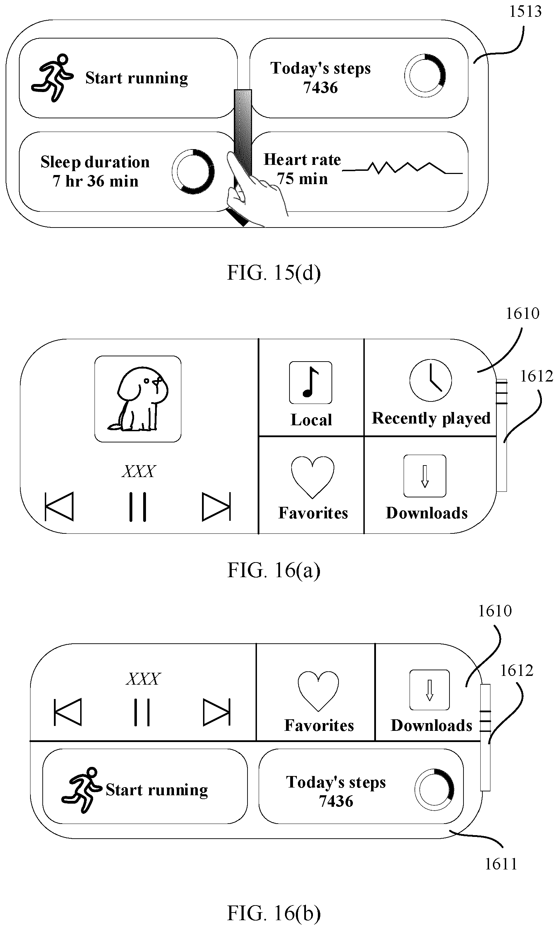

As shown in FIG. 15(d), after the user completes selection of a service widget, after detecting an operation of exiting stacked service widget switching procedure by the user, the electronic device displays, on a desktop, the service widget selected by the user.

For example, the operation of exiting the stacked service widget switching procedure by the user may be that swiping down in the display area of the service widget by the user. For example, the electronic device responds to swiping down a single finger (or a plurality of fingers) in the display area of the service widget 1513 by the user.

FIG. 16(a) to FIG. 16(c) show another group of GUIs according to an embodiment of this application.

As shown in FIG. 16(a), a scroll bar may be displayed on a side of stacked service widgets.

For example, a scroll bar 1612 may be displayed on a right side of a service widget 1610, or a scroll bar 1612 may be displayed on an upper side of a service widget 1610.

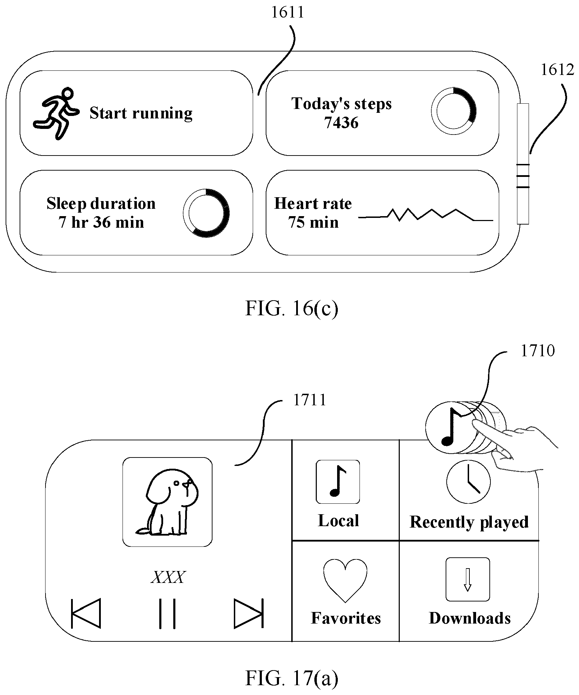

As shown in FIG. 16(b) and FIG. 16(c), the electronic device detects an operation of swiping the scroll bar 1612 by the user, and switches a service widget in response to the operation.

For example, as shown in FIG. 16(b) and FIG. 16(c), when the scroll bar is on the right side of the service widget, the electronic device switches the service widget 1610 to a service widget 1611 in response to the operation of swiping the scroll bar 1612 by the user.

When the user swipes the scroll bar 1612, a part of the service widget 1610 and a part of the service widget 1611 may be simultaneously displayed.

FIG. 17(a) to FIG. 17(c) show another group of GUIs according to an embodiment of this application.

As shown in FIG. 17(a), stacked application icons may be displayed on the stacked service widgets.

For example, the electronic device may display stacked application icons in an upper right corner of the stacked service widgets. For example, if a service widget 1711 is a music service widget, a music application icon 1710 is displayed in the stacked application icons.

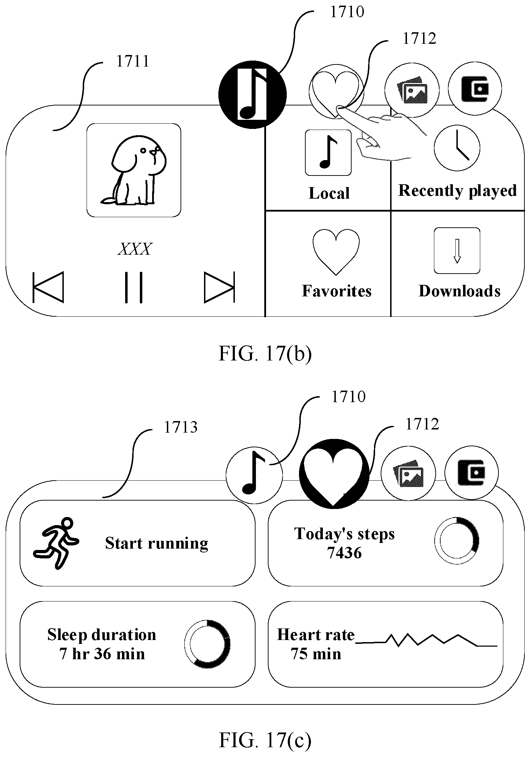

As shown in FIG. 17(a) and FIG. 17(b), after detecting a fourth operation by a user, the electronic device enters a stacked service widget switching procedure in response to the operation.

For example, the fourth operation may be alternatively tapping stacked application icons by the user. As shown in FIG. 17(a), the user taps the music application icon 1710.

As shown in FIG. 17(b) and FIG. 17(c), the electronic device enters the stacked service widget switching procedure, and may expand and display the stacked application icons. The electronic device detects an operation of switching a service widget by the user, and displays a different service widget in response to the operation.

For example, the operation of switching a service widget may be alternatively tapping an application icon by the user. For example, as shown in FIG. 17(b) and FIG. 17(c), the electronic device switches the service widget 1711 to a service widget 1713 in response to an operation of tapping a Huawei Health icon 1712 by the user.

Optionally, if the electronic device no longer detects, within a preset time, an operation performed by the user on the application icon, the application icon is restored to a stacked display manner.

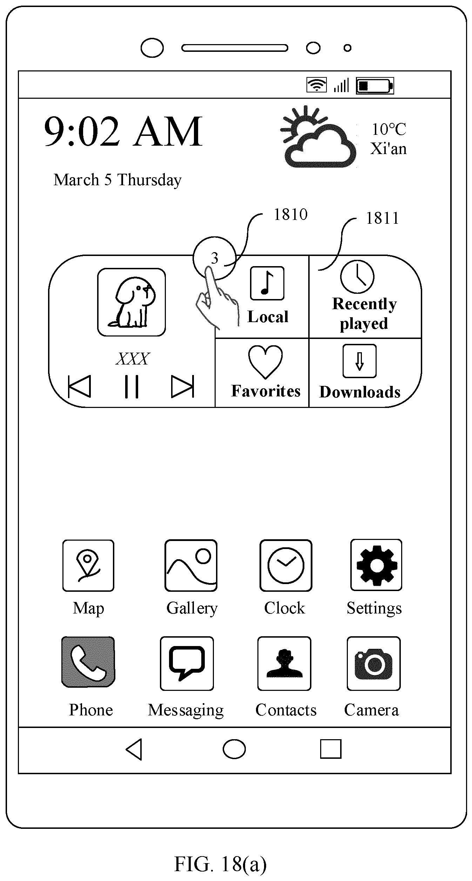

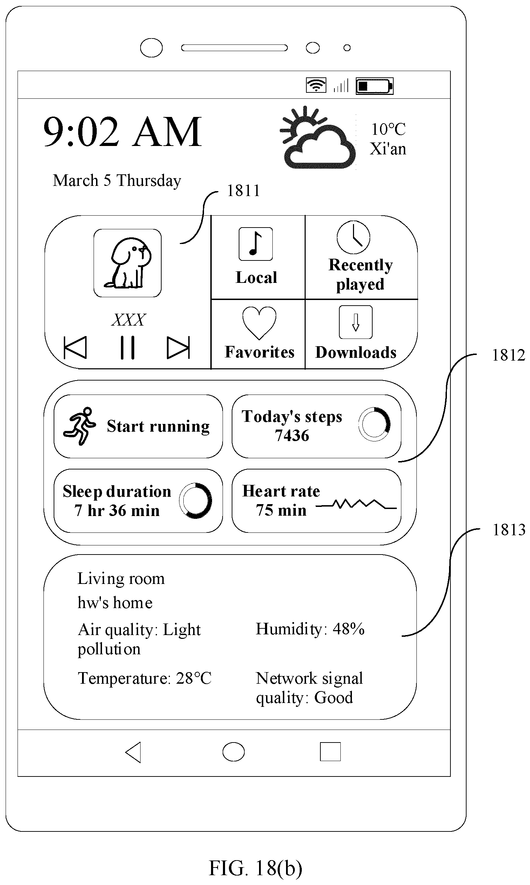

FIG. 18(a) and FIG. 18(b) show another group of GUIs according to an embodiment of this application.

As shown in FIG. 18(a), stacked service widgets are displayed on a desktop, and a widget quantity icon may be further displayed on the stacked service widgets. The widget quantity icon is used for indicating a quantity of stacked service widgets.

As shown in FIG. 18(a) and FIG. 18(b), the electronic device detects an operation of tapping a widget quantity icon 1810 by the user, and may display all stacked service widgets in response to the operation.

For example, the electronic device may display a service widget 1811, a service widget 1812, and a service widget 1813 that are stacked on the desktop. Alternatively, the electronic device may display a new interface, and display the service widget 1811, the service widget 1812, and the service widget 1813 on the new interface.

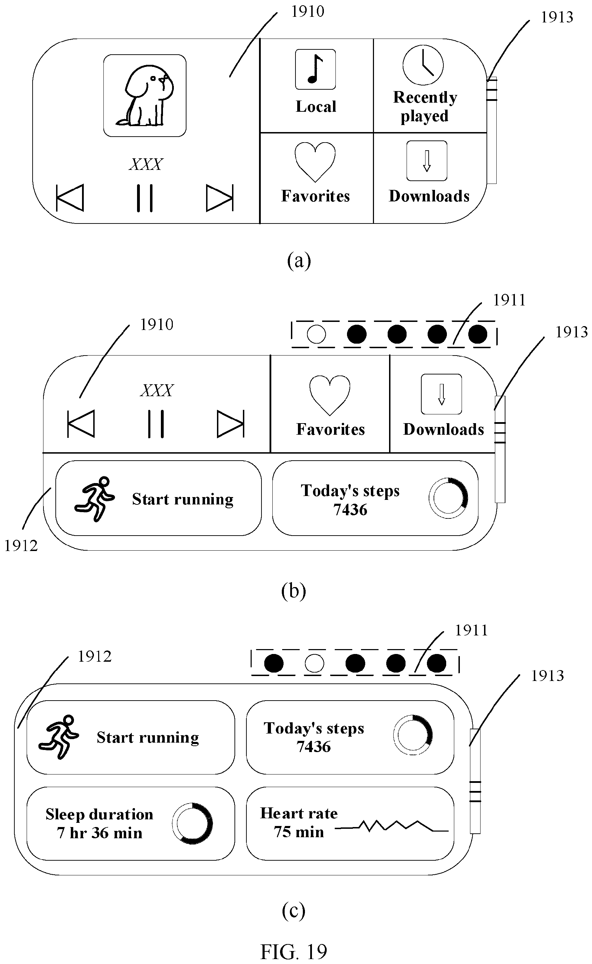

FIG. 19 shows another group of GUIs according to an embodiment of this application.

As shown in (a) in FIG. 19, a scroll bar may be displayed on a side of stacked service widgets. For descriptions of the scroll bar, refer to the foregoing embodiment. Details are not described herein again.

As shown in (a) and (b) in FIG. 19, the electronic device detects an operation of swiping a scroll bar 1913 by the user, and switches a service widget in response to the operation, and displays a widget indicator 1911 simultaneously.

As shown in (c) in FIG. 19, when switching of a service widget is completed, switching of a widget indicator is synchronously completed.

It should be understood that a service widget switching procedure and a widget indicator switching procedure are similar to those in the foregoing embodiment, and details are not described herein again.

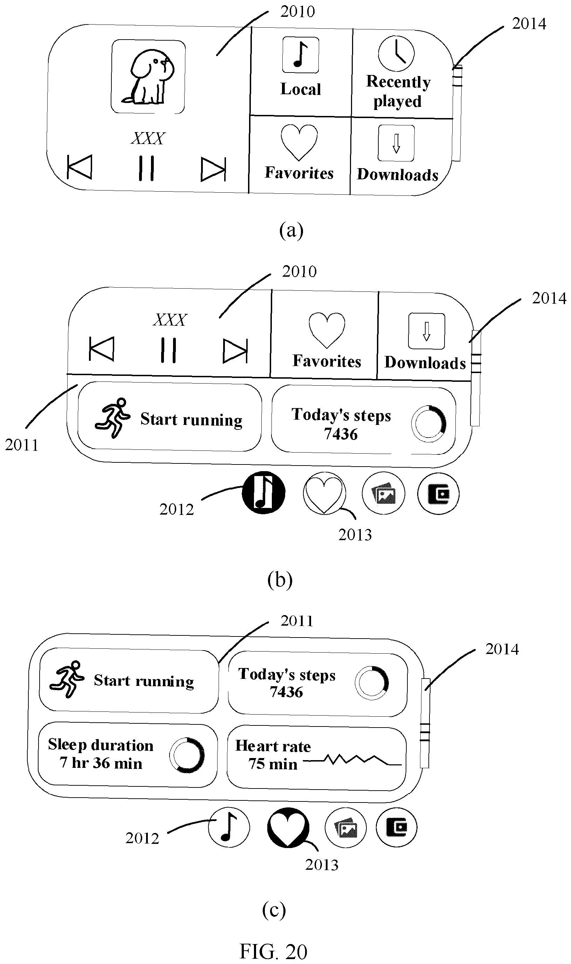

FIG. 20 shows another group of GUIs according to an embodiment of this application.

As shown in (a) in FIG. 20, a scroll bar 2014 may be displayed on a side of stacked service widgets. For descriptions of the scroll bar, refer to the foregoing embodiment. Details are not described herein again.

As shown in (a) and (b) in FIG. 20, the electronic device detects an operation of swiping the scroll bar 2014 by the user, and switches a service widget in response to the operation, and displays an application icon.

As shown in (c) in FIG. 20, when switching of a service widget is completed, switching of an application icon is synchronously completed.

It should be understood that a service widget switching procedure and an application icon switching procedure are similar to those in the foregoing embodiment, and details are not described herein again.

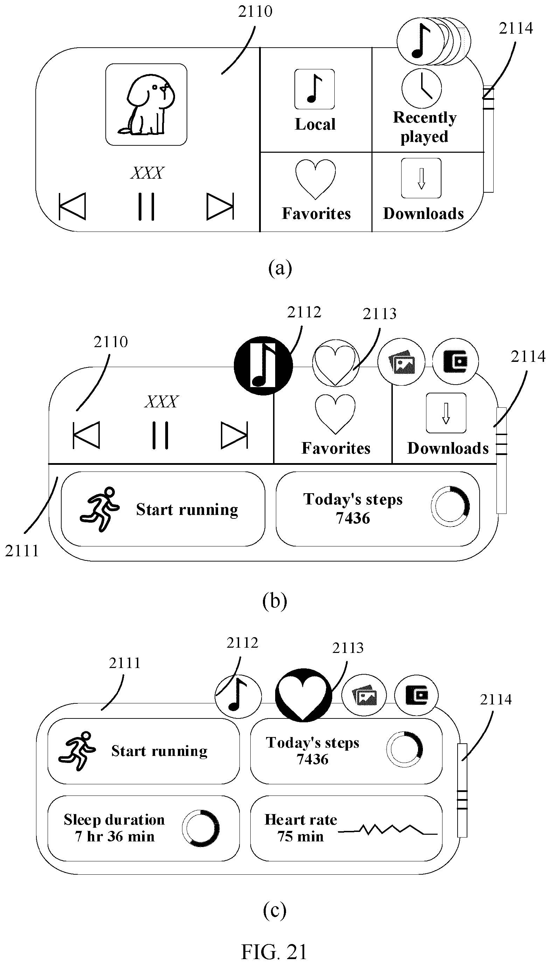

FIG. 21 shows another group of GUIs according to an embodiment of this application.

As shown in (a) in FIG. 21, a scroll bar 2114 may be displayed on a side of stacked service widgets, and the stacked application icons may be further displayed. For descriptions of the scroll bar, refer to the foregoing embodiment. Details are not described herein again.

As shown in (a) and (b) in FIG. 21, the electronic device detects an operation of swiping the scroll bar 2114 by the user, and switches a service widget in response to the operation, and expand to display the stacked application icons.

As shown in (c) in FIG. 21, when switching of a service widget is completed, switching of an application icon is synchronously completed.

It should be understood that a service widget switching procedure and an application icon switching procedure are similar to those in the foregoing embodiment, and details are not described herein again.

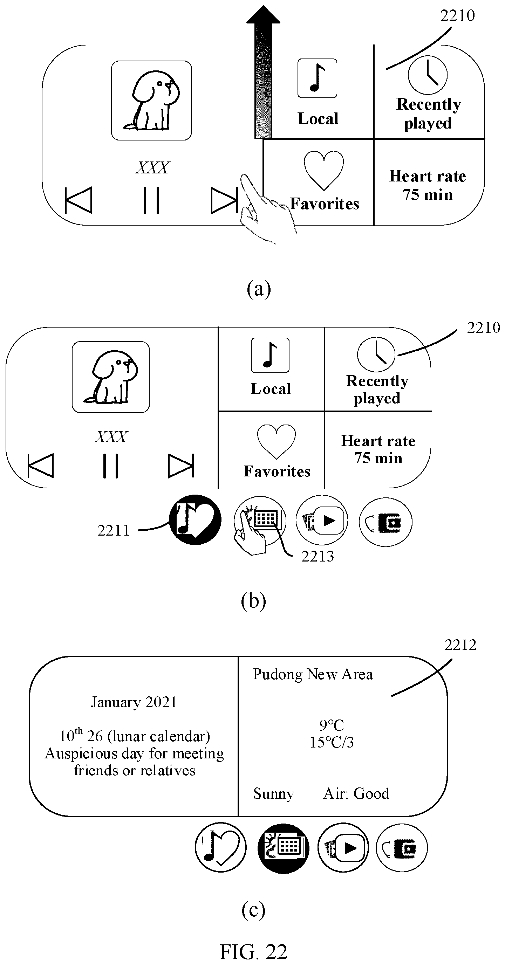

FIG. 22 shows another group of GUIs according to an embodiment of this application.

As shown in (a) and (b) in FIG. 22, after detecting a fourth operation by a user, the electronic device enters a stacked service widget switching procedure in response to the fourth operation. For descriptions of the fourth operation, refer to the foregoing embodiment. Details are not described herein again.

It should be understood that, a service widget icon may be understood as that when subwidgets of services included in a service widget belong to a plurality of applications, icons of the plurality of applications may be combined to form a service widget icon.

For example, as shown in (b) in FIG. 22, a currently displayed service widget 2210 includes five service subwidgets: "Play music", "Local", "Recently played", "Favorites", and "Heart rate". "Play music", "Local", "Recently played", and "Favorites" belong to a music application, and "Heart rate" belongs to a Huawei Health application. Therefore, an icon of the service widget is formed by two application icons: a music application icon and a Huawei Health application icon, and is, for example, a service widget icon 2211. Through the service widget icon, the user can clearly know an application to which a service subwidget belongs.

As shown in (b) in FIG. 22, after the electronic device enters the stacked service widget switching procedure, the electronic device may display a service widget icon.

Optionally, the electronic device may highlight a service widget icon for the information of the user.

As shown in (c) in FIG. 22, the electronic device detects an operation of switching a service widget by the user, and displays a different service widget in response to the operation.

For example, the operation of switching a service widget by the user may be swiping a single finger (or a plurality of fingers) in the display area of the service widget by the user, and/or tapping the service widget icon by the user. For example, as shown in (b) and (c) in FIG. 22, the electronic device switches from the service widget 2210 to a service widget 2212 in response to an operation of tapping a service widget icon 2213 by the user.

As shown in (d) in FIG. 22, after the user completes selection of a service widget, after detecting an operation of exiting stacked service widget switching procedure by the user, the electronic device displays, on a desktop, the service widget selected by the user.

It should be understood that an operation of exiting service widget selection by the user is similar to that in the foregoing embodiment, and details are not described herein again.

It should be further understood that, in the foregoing embodiment, a service widget icon may be displayed at any location at which the electronic device displays an application icon.

It should be noted that in the foregoing embodiment, an example of entering the stacked service widget switching procedure in response to the fourth operation and then displaying different service widgets in response to an operation of switching a service widget by the user is used for description. It should be understood that an operation of entering the stacked service widget switching procedure may be the same as an operation of displaying different service widgets.

FIG. 13(a) to FIG. 22 describe a service widget stacking process and a service widget stacking form.

In an embodiment of this application, a user may stack service widgets as required, and stack different service widgets in a same display area, to save desktop space. The user may select a style of stacking service widgets as required, so that user experience is improved, and operations are simple and feasible.

The following describes service widget orchestration and an orchestration process.

The service widget orchestration is that subwidgets of services in a service widget can perform corresponding functions in sequence.

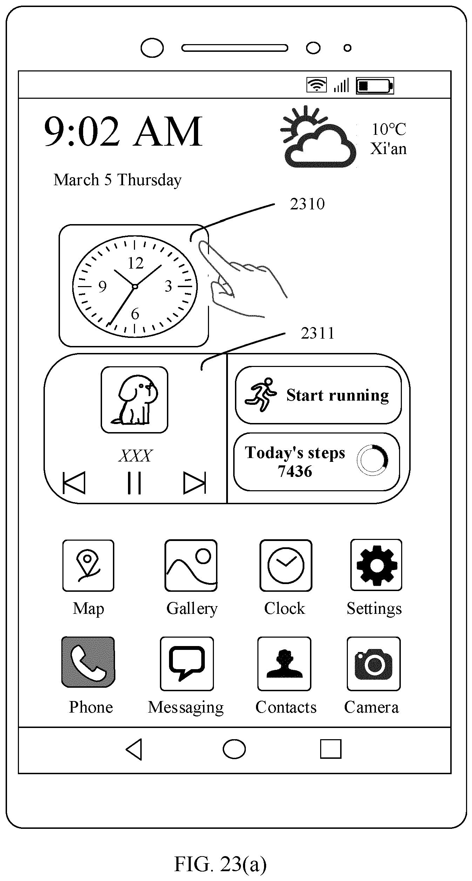

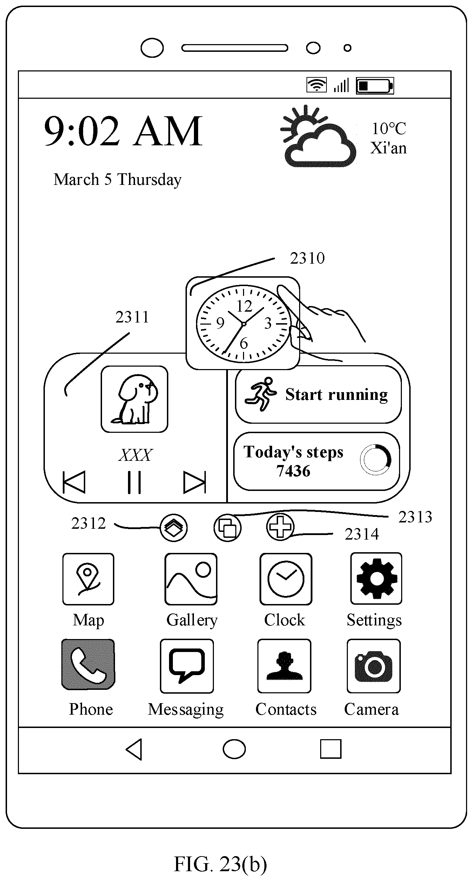

As shown in FIG. 23(a) and FIG. 23(b), a plurality of service widgets are displayed on the desktop. For descriptions of a service widget 2310 and a service widget 2311, refer to the foregoing embodiment. Details are not described herein again.

As shown in FIG. 23(b), when detecting a first operation by the user, the electronic device may display an orchestration icon 2314 in response to the first operation. For descriptions of the first operation, refer to the foregoing embodiment. Details are not described herein again.

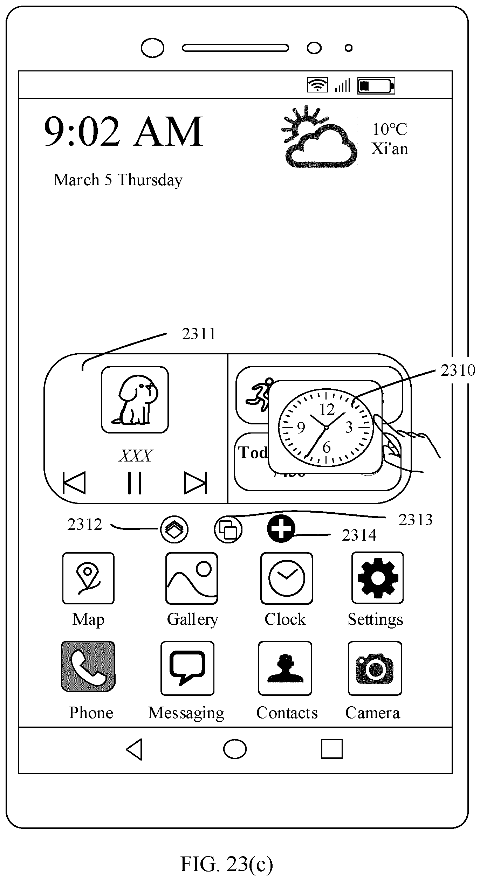

As shown in FIG. 23(c), after detecting a fifth operation of selecting the orchestration icon by the user, the electronic device enters a service widget orchestration procedure in response to the fifth operation.

The fifth operation may be dragging one service widget by the user to another service widget and moving a finger away from a screen. One service widget may be completely above a display area of another service widget, or one service widget may be partially above a display area of another service widget. Optionally, the electronic device may highlight the orchestration icon 2314, so that the user knows that in this case, the service widget orchestration procedure is to be entered when the finger leaves the screen.

For example, as shown in FIG. 23(c), after the electronic device displays the orchestration icon, the electronic device detects that the user continues to hold down the service widget 2310 and drags the service widget 2310 downward until the service widget 2310 is completely above a display area of the service widget 2311. In this case, the orchestration icon is highlighted. In this case, if the electronic device detects that the finger of the user leaves the screen, the electronic device completes the service widget stacking.

It should be noted that, when the electronic device displays a plurality of icons such as a stacking icon 2312, a reconstruction icon 2313, and an orchestration icon 2314, the user may drag a widget to select a corresponding icon as required. As shown in FIG. 23(c), after the service widget 2310 is dragged above the service widget 2311, the electronic device sequentially displays the stacking icon 2312, the reconstruction icon 2313, and the orchestration icon 2314 from left to right. The orchestration icon 2312 is in a selected state. In this case, the user may drag the widget to the left to select the stacking icon 2313, or drag the widget to the left to select the stacking icon 2312.

It should be understood that, in an embodiment of this application, the fifth operation for selecting the stacking icon may be set by the user or the system. This is not limited in this application. The fifth operation is also not limited to the example shown in FIG. 4(a) to FIG. 4(g).

It should be noted that, in the foregoing embodiment, an example in which the first operation and the fifth operation form one complete operation is used for description. It may be understood that the first operation and the fifth operation may be two separate operations.

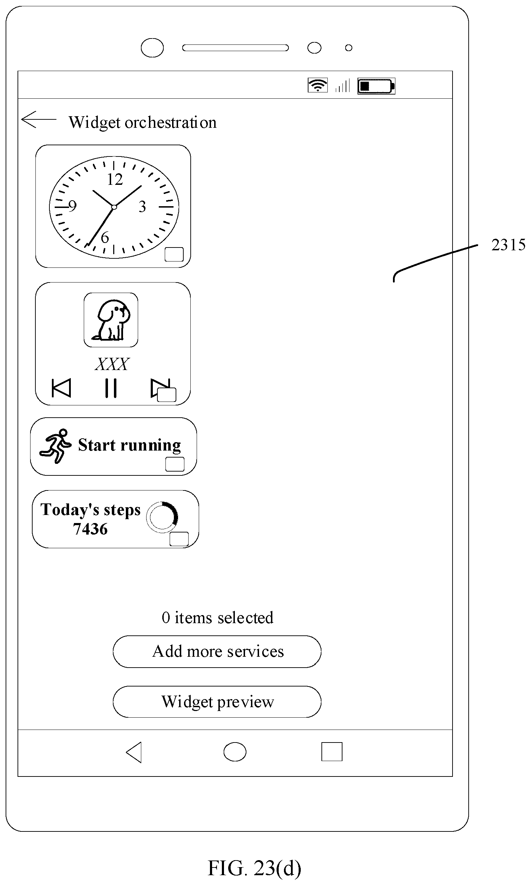

As shown in FIG. 23(d), after the electronic device enters the service widget orchestration procedure, the electronic device may display a widget orchestration interface 2315.

For example, the widget orchestration interface 2315 may include all service subwidgets of an orchestrated service widget.

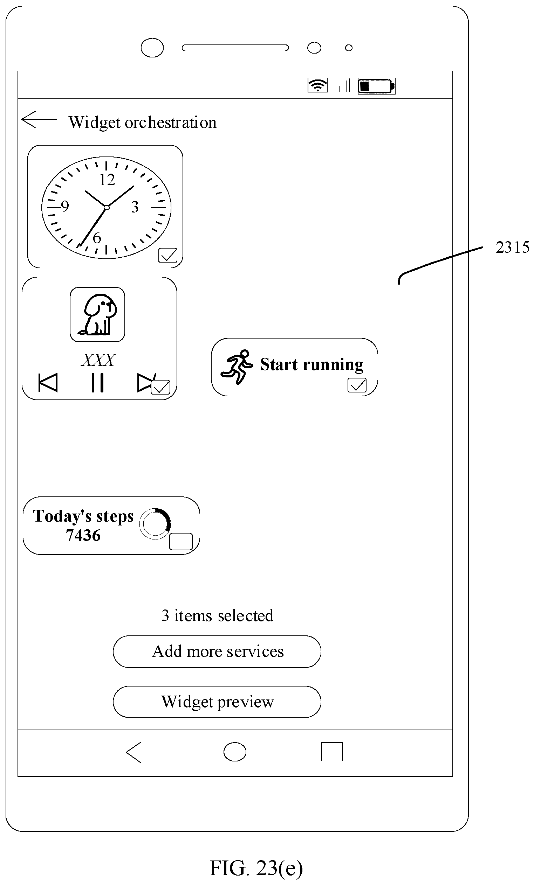

As shown in FIG. 23(e), on the widget orchestration interface 2315, the user may select service subwidgets, and may further perform a sorting operation on the service subwidgets.

For example, the sorting operation performed by the user on the service subwidgets may be holding down the service subwidgets and dragging the service subwidgets by the user. For example, as shown in FIG. 23(d), the user selects a "Clock" subwidget, a "Play music" subwidget, and a "Start running" subwidget. After completing selection of the service subwidgets, the user may hold down the "Start running" subwidget, and drag the "Start running" subwidget to be side-by-side with the "Play music" subwidget. After completing the sorting operation of the service subwidgets, in the widget orchestration interface 2315 of the electronic device, from top to bottom, the "Clock" subwidget is at the first location, the "Play music" subwidget and the "Start running" subwidget are at the second location, and a "Today's steps" subwidget is at the third location. The sorting of the service subwidgets indicates that a service corresponding to the "Clock" subwidget is first executed, and then services corresponding to the "Play music" subwidget and the "Start running" subwidget are synchronously executed. For example, the user sets running at 19:00. When 19:00 is reached, the orchestrated service widgets may prompt the user of the running time, and after it is detected that the user starts running, services corresponding to the remaining two service subwidgets are synchronously enabled.

It should be understood that, in an embodiment of this application, that the user first selects service subwidgets and then sorts the service subwidgets is used as an example. However, this is not limited thereto. The user may first sort service subwidgets and then select service subwidgets.

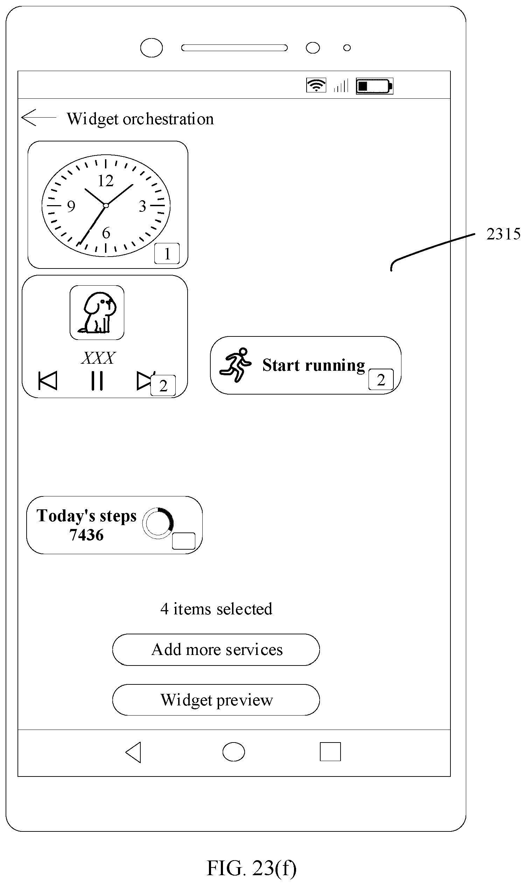

Optionally, after the service subwidgets are sorted, locations of the service subwidgets may be displayed on the service subwidgets. For example, as shown in FIG. 23(f), after the user completes sorting of the service subwidgets, "1" may be displayed after the user taps the "Clock" subwidget, indicating that a service corresponding to the subwidget is first executed. "2" may be displayed after the user taps the "Play music" subwidget, and "2" may be displayed after the user taps the "Start running" subwidget, indicating that services corresponding to the two subwidgets are executed after the service corresponding to the "Clock" subwidget is executed.

In an embodiment of this application, a user may orchestrate service widgets as required, so that service subwidgets in the service widget perform corresponding functions in a specified execution order, so that user experience is improved, and operations are simple and feasible.

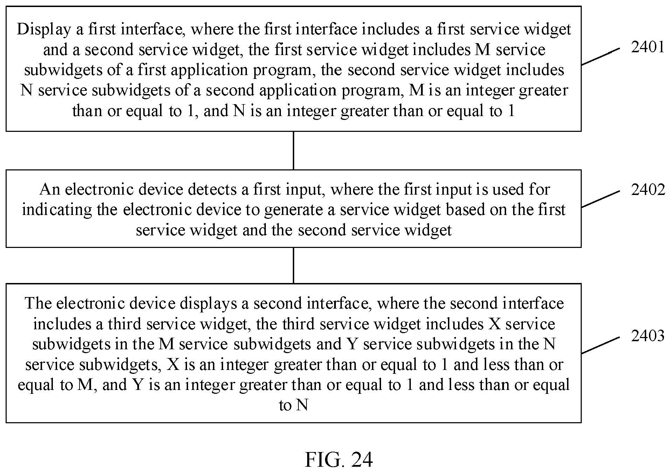

With reference to the foregoing embodiments and related accompanying drawings, an embodiment of this application provides a service widget processing method. The method may be implemented in the electronic device (for example, a mobile phone or a tablet computer) with a touchscreen shown in FIG. 1 and FIG. 2. FIG. 24 is a schematic flowchart of service widget processing according to an embodiment of this application. As shown in FIG. 24, the method may include the following steps.

S2401: Display a first interface, where the first interface includes a first service widget and a second service widget, the first service widget includes M service subwidgets of the first application, the second service widget includes N service subwidgets of the second application, M is an integer greater than or equal to 1, and N is an integer greater than or equal to 1.

S2402: Detect a first input, where the first input is used for indicating the electronic device to generate a service widget based on the first service widget and the second service widget.

It should be understood that the first input may include the first operation and the second operation in the foregoing embodiments.

S2403: Display a second interface, where the second interface includes a third service widget, the third service widget includes X service subwidgets in the M service subwidgets and Y service subwidgets in the N service subwidgets, X is an integer greater than or equal to 1 and less than or equal to M, and Y is an integer greater than or equal to 1 and less than or equal to N.

It should be understood that the first interface and the second interface may be a desktop, a HiBoard, a control center, or a lock screen interface of the electronic device.

In a possible implementation, the first input includes: dragging the first service widget or the second service widget, to make the first service widget and the second service widget completely overlap or partially overlap.

In a possible implementation, the electronic device displays the second interface in response to the first input if a sum of M and N is less than or equal to a first threshold. If the sum of M and N is greater than the first threshold, the electronic device displays a service selection interface in response to the first input.

For example, as shown in FIG. 5(a), FIG. 5(b), FIG. 5(c), and FIG. 5(f), when a quantity of service widgets being reconstructed is less than or equal to the first threshold, the reconstructed service widgets may be directly displayed on the second interface.

In another possible implementation, the electronic device displays the second interface in response to the first input if a time interval from time at which the first service widget and the second service widget overlap to time at which a finger leaves a screen is less than or equal to a second threshold.

In a possible implementation, after the electronic device detects the first input and before the electronic device displays the second interface, the method further includes: The electronic device displays a third interface in response to the first input, where the third interface includes the M service subwidgets and the N service subwidgets. The third interface may be the service selection interface. The electronic device detects a second input of selecting the X service subwidgets and the Y service subwidgets by a user, and generates the third service widget based on the X service subwidgets and the Y service subwidgets selected by the user.

For example, as shown in FIG. 4(d), the electronic device displays the service selection interface in response to the first input. The service selection interface may include all service subwidgets of the service widget being reconstructed. After detecting that the user selects a service subwidget, the electronic device may generate a service widget based on the selection of the user.

In a possible implementation, after the electronic device detects the second input and before the electronic device displays the second interface, the method further includes: The electronic device displays a fourth interface based on the X service subwidgets and the Y service subwidgets selected by the user, where the fourth interface may be a preview interface of the third service widget.

In a possible implementation, in some implementations of the first aspect, if the sum of M and N is greater than the first threshold, the electronic device skips a service selection procedure in response to the first input, and displays the fourth interface.

For example, as shown in FIG. 5(a) to FIG. 5(e), when a sum of service subwidgets of the service widget being reconstructed is greater than the first threshold, the electronic device may skip the service selection procedure in response to the first input, and directly display a widget preview interface.

In a possible implementation, the fourth interface further includes a first icon and a second icon, the first icon is used for indicating a first service widget style, the second icon is used for indicating a second service widget style, the first service widget style is different from the second service widget style. The displaying the fourth interface includes: when the first icon is selected, displaying the preview interface of the third service widget in the first service widget style; or when the second icon is selected, displaying the preview interface of the third service widget in the second style.

For example, as shown in FIG. 4(e), after detecting an operation of tapping a service widget style template 418 by the user, the electronic device switches the service widget style from FIG. 4(e) to FIG. 4(f).

In a possible implementation, after the electronic device displays the third interface in response to the first input and before the electronic device detects the second input, the method further includes: When the third interface is displayed, the electronic device detects a third input of selecting P service subwidgets and Q service subwidgets by the user, where P is an integer greater than or equal to 1 and less than or equal to M, and Q is an integer greater than or equal to 1 and less than or equal to N. The electronic device displays a fifth interface in response to the third input, where the fifth interface is a preview interface of a fourth service widget, and the fourth service widget includes the P service subwidgets and the Q service subwidgets. The electronic device detects a fourth input; and displays the third interface in response to the fourth input.

In a possible implementation, after the first input, the method further includes: The electronic device displays a third interface in response to the first input, where the third interface includes the M service subwidgets and the N service subwidgets. The electronic device generates a fifth service widget in response to detecting a fifth input of selecting U service subwidgets and V service subwidgets by a user, where the fifth service widget includes the U service subwidgets and the V service subwidgets selected by the user. The electronic device generates a sixth service widget in response to detecting a sixth input of selecting J service subwidgets and K service subwidgets by a user, where the sixth service widget includes the J service subwidgets and the K service subwidgets selected by the user. The electronic device displays a sixth interface, where the sixth interface includes the fifth service widget and the sixth service widget.

It should be understood that the sixth interface may be a desktop, a HiBoard, a control center, or a lock screen interface of the electronic device.

In a possible implementation, that the electronic device displays a sixth interface, where the sixth interface includes the fifth service widget and the sixth service widget includes: displaying the fifth service widget and the sixth service widget in an overlapping manner; and displaying the fifth service widget and the sixth service widget side-by-side. The fifth service widget and the sixth service widget may be displayed on a same interface, or may be displayed on different interfaces.

In a possible implementation, after the electronic device detects the first input, the method further includes: The electronic device displays a third interface in response to the first input, where the third interface includes the M service subwidgets and the N service subwidgets; displays a seventh interface in response to detecting a seventh input of a user on the third interface, where the seventh interface is a more service selection interface, the seventh interface includes L service subwidgets, the L service widgets are different from the M service widgets and the N service widgets, and L is an integer greater than or equal to 1; and displays an eighth interface in response to an eighth input of selecting Z service subwidgets from the L service subwidgets by the user, where the eighth interface is a preview interface of a seventh service widget, and the seventh service widget includes the X service subwidgets, the Y service subwidgets, and the Z service subwidgets.

In a possible implementation, after the electronic device detects the first input, the method further includes: The electronic device generates and displays an eighth service widget and a ninth service widget based on the M service subwidgets and the N service subwidgets if a sum of M and N is greater than a third threshold, where the eighth service widget is different from the ninth service widget.

It should be understood that the third threshold may be the same as or different from the first threshold.

In a possible implementation, the electronic device displays a tenth service subwidget, where the tenth service subwidget includes a first service subwidget and a second service subwidget; and when content displayed on the first service subwidget is updated from first content to second content, the electronic device updates, based on the second content, content displayed on the second service subwidget.

In a possible implementation, the first interface may further include an eleventh service widget and a twelfth service widget, and the method further includes: The electronic device detects a ninth input, where the ninth input is used for indicating the electronic device to display, on the second interface, the eleventh service widget and the twelfth service widget completely overlapping or partially overlapping.

It should be understood that the ninth input may include the first operation and the third operation.

For example, as shown in FIG. 13(a) to FIG. 22, the electronic device may display the service widget in a plurality of stacked display forms.

In a possible implementation, after the electronic device detects the first input and before the electronic device displays the second interface, the method further includes: The electronic device displays a ninth interface in response to the first input, where the ninth interface may be a widget orchestration interface and includes the M service subwidgets and the N service subwidgets. The electronic device detects a tenth input of selecting and sorting a third service subwidget and a fourth service subwidget by the user, where the third service subwidget is any one of the M service subwidgets, and the fourth service subwidget is any one of the N service subwidgets; and generates a thirteenth service widget based on the third service subwidget and the fourth service subwidget that are selected and sorted by the user. The electronic device displays third content on the third service subwidget and fourth content on the fourth service subwidget in an order obtained through sorting by the user.

It should be understood that the first input may be the first operation and the fifth operation.

In an embodiment of this application, a user may customize a service widget as required, and combine subwidgets of services of different applications, to meet a requirement of the user for using a plurality of applications and a plurality of services in one scenario. A user may retain or delete a service subwidget as required, so that limited display space is effectively used. The user may perform operations on a service widget displayed on an interface to enter a service widget reconstruction procedure and generate a required service widget. The operations are simple and feasible. The user may further stack or orchestrate service widgets, so that interactivity of service widgets is improved, and display space is saved.

The foregoing embodiments may be used separately, or may be used in combination to implement different technical effects.

In the foregoing embodiments provided in this application, the methods provided in embodiments of this application are described from a perspective in which an electronic device serves as an execution body. To implement functions in the method provided in embodiments of this application, the electronic device may include a hardware structure and/or a software module, and implement the functions in a form of the hardware structure, the software module, or a combination of the hardware structure and the software module. Whether one of the foregoing functions is performed in the manner of a hardware structure, a software module, or a hardware structure and a software module depends on a specific application and design constraints of the technical solutions.

An embodiment of this application further provides an electronic device, including a display, a processor, a memory, one or more sensors, a power key, an application, and a computer program. The foregoing components may be connected through one or more communication buses. The one or more computer programs are stored in the foregoing memory and configured to be executed by the one or more processors. The one or more computer programs include instructions, and the instructions may be used to enable the electronic device to perform the steps of the interface display methods in the foregoing embodiments.

For example, the processor may be specifically the processor 110 shown in FIG. 2, the memory may be specifically the internal memory 120 shown in FIG. 2 and/or the external memory connected to the electronic device, the display may be specifically the display 130 shown in FIG. 2, the sensor may be specifically one or more sensors in the sensor module 150 shown in FIG. 2, and the power key may be the power key 141 shown in FIG. 2. Embodiments of this application do not impose any limitation on this.

In addition, an embodiment of this application further provides a graphical user interface (graphical user interface, GUI) on an electronic device. The graphical user interface specifically includes a graphical user interface displayed when the electronic device performs the foregoing method embodiments.

According to context, the term "when ..." or "after ..." used in the foregoing embodiments may be interpreted as a meaning of "if...", "after ...", "in response to determining ...", or "in response to detecting ..." Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible by a computer or a data storage device like a server or data center that contains one or more available media integrated. The available medium may be a magnetic medium (for example, a floppy disk, a hard disk, or a magnetic tape), an optical medium (for example, a DVD), a semiconductor medium (for example, a solid-state drive, Solid-State Drive (SSD)), or the like. In a case in which no conflict occurs, the solutions in the foregoing embodiments may be combined for use.

## Claims

1. A service widget processing method, wherein the method is applied to an electronic device, the electronic device comprises a first application and a second application, and the method comprises:
displaying, by the electronic device, a first interface, wherein the first interface comprises a first service widget and a second service widget, the first service widget comprises M service subwidgets of the first application, the second service widget comprises N service subwidgets of the second application, M is an integer greater than or equal to 1, and N is an integer greater than or equal to 1;
detecting, by the electronic device, a first input, wherein the first input is used for indicating the electronic device to generate a service widget based on the first service widget and the second service widget; and
displaying, by the electronic device, a second interface, wherein the second interface comprises a third service widget, the third service widget comprises X service subwidgets in the M service subwidgets and Y service subwidgets in the N service subwidgets, X is an integer greater than or equal to 1 and less than or equal to M, and Y is an integer greater than or equal to 1 and less than or equal to N.

2. The method according to claim 1, wherein the first input comprises: dragging the first service widget or the second service widget, to make the first service widget and the second service widget completely overlap or partially overlap.

3. The method according to claim 2, wherein the displaying, by the electronic device, a second interface comprises:
displaying, by the electronic device, the second interface in response to the first input if a sum of M and N is less than or equal to a first threshold.

4. The method according to claim 2, wherein the displaying, by the electronic device, a second interface comprises:
displaying, by the electronic device, the second interface in response to the first input if a time interval from time at which the first service widget and the second service widget overlap to time at which a finger leaves a screen is less than or equal to a second threshold.

5. The method according to claim 1, wherein after the detecting, by the electronic device, a first input, and before the displaying, by the electronic device, a second interface, the method further comprises:
displaying, by the electronic device, a third interface in response to the first input, wherein the third interface comprises the M service subwidgets and the N service subwidgets;
detecting, by the electronic device, a second input of selecting the X service subwidgets and the Y service subwidgets by a user; and
generating the third service widget based on the X service subwidgets and the Y service subwidgets selected by the user.

6. The method according to claim 5, wherein after the detecting, by the electronic device, a second input, and before the displaying, by the electronic device, a second interface, the method further comprises:
displaying, by the electronic device, a fourth interface based on the X service subwidgets and the Y service subwidgets selected by the user, wherein the fourth interface is a preview interface of the third service widget.

7. The method according to claim 6, wherein
the fourth interface further comprises a first icon and a second icon, the first icon is used for indicating a first service widget style, the second icon is used for indicating a second service widget style, the first service widget style is different from the second service widget style, and the displaying a fourth interface comprises:
when the first icon is selected, displaying the preview interface of the third service widget in the first service widget style; or
when the second icon is selected, displaying the preview interface of the third service widget in the second service widget style.

8. The method according to claim 5, wherein after the displaying, by the electronic device, a third interface in response to the first input, and before the detecting, by the electronic device, a second input, the method further comprises:
when the third interface is displayed, detecting, by the electronic device, a third input of selecting P service subwidgets and Q service subwidgets by the user, wherein P is an integer greater than or equal to 1 and less than or equal to M, and Q is an integer greater than or equal to 1 and less than or equal to N;
displaying, by the electronic device, a fifth interface in response to the third input, wherein the fifth interface is a preview interface of a fourth service widget, and the fourth service widget comprises the P service subwidgets and the Q service subwidgets;
detecting, by the electronic device, a fourth input; and
displaying the third interface in response to the fourth input.

9. The method according to claim 1, wherein after the first input, the method further comprises:
displaying, by the electronic device, a third interface in response to the first input, wherein the third interface comprises the M service subwidgets and the N service subwidgets;
generating, by the electronic device, a fifth service widget in response to detecting a fifth input of selecting U service subwidgets and V service subwidgets by a user, wherein the fifth service widget comprises the U service subwidgets and the V service subwidgets selected by the user;
generating, by the electronic device, a sixth service widget in response to detecting a sixth input of selecting J service subwidgets and K service subwidgets by a user, wherein the sixth service widget comprises the J service subwidgets and the K service subwidgets selected by the user; and
displaying, by the electronic device, a sixth interface, wherein the sixth interface comprises the fifth service widget and the sixth service widget.

10. The method according to claim 9, wherein the displaying, by the electronic device, a sixth interface, wherein the sixth interface comprises the fifth service widget and the sixth service widget comprises:
displaying the fifth service widget and the sixth service widget in an overlapping manner; and
displaying the fifth service widget and the sixth service widget side-by-side.

11. The method according to claim 1, wherein after the detecting, by the electronic device, a first input, the method further comprises:
displaying, by the electronic device, a third interface in response to the first input, wherein the third interface comprises the M service subwidgets and the N service subwidgets;
displaying a seventh interface in response to detecting a seventh input of a user on the third interface, wherein the seventh interface comprises L service subwidgets, the L service widgets are different from the M service widgets and the N service widgets, and L is an integer greater than or equal to 1; and
displaying an eighth interface in response to an eighth input of selecting Z service subwidgets from the L service subwidgets by the user, wherein the eighth interface is a preview interface of a seventh service widget, and the seventh service widget comprises the X service subwidgets, the Y service subwidgets, and the Z service subwidgets.

12. The method according to claim 1, wherein after the detecting, by the electronic device, a first input, the method further comprises:
generating and displaying, by the electronic device, an eighth service widget and a ninth service widget based on the M service subwidgets and the N service subwidgets if a sum of M and N is greater than a third threshold, wherein the eighth service widget is different from the ninth service widget.

13. The method according to any one of claims 1 to 12, wherein the method further comprises:
displaying, by the electronic device, a tenth service subwidget, wherein the tenth service subwidget comprises a first service subwidget and a second service subwidget; and
when content displayed on the first service subwidget is updated from first content to second content, updating, by the electronic device based on the second content, content displayed on the second service subwidget.

14. An electronic device, comprising one or more processors, one or more memories, and a display, wherein the one or more memories store one or more computer programs, the one or more computer programs comprise instructions, and when the instructions are executed by the one or more processors, the electronic device is enabled to perform the method according to any one of claims 1 to 13.

15. A computer-readable storage medium, comprising computer instructions, wherein when the computer instructions run on an electronic device, the electronic device is enabled to perform the method according to any one of claims 1 to 13.

16. A computer program, wherein when the computer program is run on a computer, the computer is enabled to perform the method according to any one of claims 1 to 13.

17. A computer program product, wherein when the computer program product is run on a computer, the computer is enabled to perform the method according to any one of claims 1 to 13.
